# EUROPEAN PATENT APPLICATION

(11) **EP 2 040 033 A1**
(43) Date of publication of application: **25.03.2009**
(21) Application number: 07767944.7
(22) Date of filing: 29.06.2007
(51) Int. Cl.: G01C 19/56, G01P 9/04

(54) **OSCILLATION GYRO SENSOR**

(30) Priority: 30.06.2006 JP 2006182745
(71) Applicant: Sony Corporation, Tokyo 108-0075 (JP)
(72) Inventor: NAKASHIO, Eiji, Tokyo 108-0075 (JP); WATANABE, Shigeto, Tokyo 108-0075 (JP); SASAKI, Shin, Tokyo 141-0032 (JP); INAGUMA, Teruo, Tokyo 108-0075 (JP); HONDA, Junichi, Tokyo 108-0075 (JP); KURIHARA, Kazuo, Tokyo 108-0075 (JP); SHISHIDO, Yuji, Tokyo 108-0075 (JP); TAKAHASHI, Tomoyuki, Tokyo 108-0075 (JP)
(74) Representative: Müller - Hoffmann & Partner
(86) International application number: PCT/JP2007/063160
(87) International publication number: WO 2008/001908

(57) **Abstract**

A vibration type gyro sensor according to the present invention includes vibrating elements 1X and 1Y which detect angular velocities, a support substrate 2 which is electrically connected to the vibrating elements 1X and 1Y and which supports the vibrating elements 1X and 1Y, a relay substrate 4 which is electrically connected to the support substrate 2 and which includes external connection terminals 3, and buffer members 5 which are disposed between the support substrate 2 and the relay substrate 4 and which suppress transmission of strain and vibration between the support substrate 2 and the relay substrate 4. The vibration type gyro sensor is capable of stabilizing vibration characteristics without being influenced by strain and vibration.

## Description

### Technical Field

The present invention relates to vibration type gyro sensors used for, for example, motion-blur detection in video cameras, motion detection in virtual reality apparatuses, and direction detection in car navigation systems.

### Background Art

Conventionally, so-called gyro sensors of vibration type (hereinafter called "vibration type gyro sensors") have been widely used as angular velocity sensors for general use. A vibration type gyro sensor detects an angular velocity by causing a cantilever vibrator to vibrate at a predetermined resonance frequency and detecting, with a piezoelectric element or the like, a Coriolis force generated due to the influence of angular velocity.

Vibration type gyro sensors are advantageous in that they have a simple mechanism and a short activation time and can be manufactured with low cost. The vibration type gyro sensors are mounted in, for example, electronic devices, such as video cameras, virtual reality apparatuses, and car navigation systems, to function as sensors for motion-blur detection, motion detection, and direction detection, respectively.

With the reduction in size and increase in performance of electronic devices in which the vibration type gyro sensors are mounted, there is a demand for vibration type gyro sensors with smaller size and higher performance. For example, to increase the functionality of the electronic devices, there is a demand for mounting a vibration type gyro sensor together with various kinds of sensors used for other purposes on a single substrate so that the size can be reduced. To achieve the size reduction, a technique called MEMS (Micro-Electro-Mechanical System) is commonly used in which a structure is formed by thin-film processes and a photolithography technique, which are used for semiconductors, using a silicon (Si) substrate (see, for example, Japanese Unexamined Patent Application Publication No. 2005-227110).

### Disclosure of Invention

However, with regard to the above-described components which are small and which involve vibrating motion, there is a possibility that the characteristics will largely vary due to the influence of external strain or the influence of reflection of vibration. In particular, in the case where the above-described kind of vibration type gyro sensor is mounted together with other sensor components on the same substrate to form a module, the angular-velocity detection characteristics after the mounting process may differ from those before the mounting process. In such a case, there is a risk that the specification standard cannot be satisfied even when various adjustments are performed after the mounting process.

In addition, in the case where a movable component, such as a zoom mechanism of a camera lens, is mounted on the mounting substrate or is disposed in the vicinity thereof, there is a risk that vibration characteristics of a vibrating element will vary due to the movement of the movable component or the detection output will be reduced due to a reduction in S/N.

The present invention has been made in view of the above-described problems, and an object of the present invention is to provide a vibration type gyro sensor capable of stabilizing the vibration characteristics without being influenced by strain or vibration.

To attain the above-described object, a vibration type gyro sensor according to the present invention includes a vibrating element which detects an angular velocity; a support substrate which is electrically connected to the vibrating element and which supports the vibrating element; a relay substrate which is electrically connected to the support substrate and which has an external connection terminal; and a buffer member disposed between the support substrate and the relay substrate.

The buffer member can be formed of an elastic member, such as a spring or rubber, which elastically supports the support substrate with respect to the relay substrate. Since the support substrate is elastically supported with respect to the relay substrate by the buffer member, strain generated in the relay substrate can be prevented from being transmitted to the support substrate and vibration characteristics of the vibrating element can be stabilized. In addition, since the transmission of vibration from the support substrate, which supports the vibrating element, to the relay substrate can be suppressed, the influence of noise caused when the vibration of the vibrating element leaks outside can be avoided. Accordingly, stable vibration characteristics and the output characteristics can be improved.

If the buffer member is structured so as to function also as a wiring member which electrically connects the support substrate and the relay substrate to each other, the number of components can be reduced. More specifically, examples of such a buffer member include a spring made of metal, a flexible wiring board, conductive paste or an anisotropic conductive film having a relatively high elastic deformability.

As described above, according to the vibration type gyro sensor of the present invention, vibration characteristics can be stabilized without being influenced by strain or vibration.

### Brief Description of Drawings

[Fig. 1] Fig. 1 is a sectional side view illustrating the schematic structure of a vibration type gyro sensor according to a first embodiment of the present invention.
[Fig. 2] Fig. 2 is a schematic plan view of a support substrate included in the vibration type gyro sensor shown in Fig. 1.
[Fig. 3] Fig. 3 is a plan view of the vibration type gyro sensor shown in Fig. 1 in the state in which a cap member is removed.
[Fig. 4] Fig. 4 is a back side view illustrating the structure of a vibrating element included in the vibration type gyro sensor shown in Fig. 1.
[Fig. 5] Fig. 5 is a sectional side view of another gyro sensor illustrated in comparison with the vibration type gyro sensor shown in Fig. 1.
[Fig. 6] Fig. 6 shows an experiment result illustrating the offset voltage characteristics with respect to load of the vibration type gyro sensor of the comparative example shown in Fig. 5.
[Fig. 7] Fig. 7 shows an experiment result illustrating the offset voltage characteristics with respect to load of the vibration type gyro sensor according to the present invention shown in Fig. 1.
[Fig. 8] Fig. 8 is a diagram illustrating a method for evaluating vicinity noise of the vibration type gyro sensor, wherein part A is a sectional side view and part B is a plan view.
[Fig. 9] Fig. 9 shows an experiment result illustrating the vicinity noise characteristics of the vibration type gyro sensor of the comparative example shown in Fig. 5.
[Fig. 10] Fig. 10 shows an experiment result illustrating the vicinity noise characteristics of the vibration type gyro sensor according to the present invention shown in Fig. 1.
[Fig. 11] Fig. 11 shows an experiment result illustrating the relationship between the resonance frequency of buffer members and the offset voltage variation of vibrating elements in the vibration type gyro sensor shown in Fig. 1.
[Fig. 12] Fig. 12 shows an experiment result illustrating the relationship between the resonance frequency of spring members and the magnitude of vicinity noise in the vibration type gyro sensor shown in Fig. 1.
[Fig. 13] Fig. 13 shows a model diagram and an experiment result illustrating the relationship between the horizontal distance of main portions of the spring members and the resonance frequency in the vibration type gyro sensor shown in Fig. 1.
[Fig. 14] Fig. 14 is a schematic sectional side view illustrating a modification of the structure of bonding sections between the spring members and the support substrate in the vibration type gyro sensor shown in Fig. 1.
[Fig. 15] Fig. 15 is an enlarged view illustrating a modification of the structure of the main part in Fig. 14.
[Fig. 16] Fig. 16 shows an experiment result illustrating the relationship between the area of the support substrate and the Q-value of the vibrating elements in the vibration type gyro sensor shown in Fig. 1.
[Fig. 17] Fig. 17 is a plan view of the main part illustrating an example of arrangement of the spring members in the vibration type gyro sensor shown in Fig. 1.
[Fig. 18] Fig. 18 is a diagram illustrating the relationship between the direction in which strain is applied and the varying output voltage for each arrangement of the spring members in the vibration type gyro sensor shown in Fig. 1.
[Fig. 19] Fig. 19 is a diagram corresponding to Fig. 18 in which data obtained when the position of the center of rigidity of the support substrate is changed is added.
[Fig. 20] Fig. 20 is a plan view of the main part illustrating another example of arrangement of the spring members in the vibration type gyro sensor shown in Fig. 1.
[Fig. 21] Fig. 21 is a diagram illustrating the relationship between the distance between the center of gravity and the center of rigidity of the support substrate and the output noise.
[Fig. 22] Fig. 22 is a diagram illustrating a modification of the example of arrangement of the spring members shown in Fig. 20.
[Fig. 23] Fig. 23 is a schematic plan view of another support substrate on which components are mounted in a manner different from those on the support substrate shown in Fig. 20.
[Fig. 24] Fig. 24 is a diagram illustrating an example of arrangement of spring members suitable for the support substrate shown in Fig. 23.
[Fig. 25] Fig. 25 is a schematic sectional side view illustrating a modification of the structure of the cap member included in the vibration type gyro sensor shown in Fig. 1.
[Fig. 26] Fig. 26 is an overall perspective view illustrating another modification of the structure of the cap member included in the vibration type gyro sensor shown in Fig. 1.
[Fig. 27] Fig. 27 is a sectional view illustrating the relationship between the support substrate and the cap member in the vibration type gyro sensor show in Fig. 26, viewed from a component-mounting-surface side of the support substrate.
[Fig. 28] Fig. 28 is an overall perspective view illustrating still another modification of the structure of the cap member included in the vibration type gyro sensor shown in Fig. 1.
[Fig. 29] Fig. 29 is a sectional side view of the main part illustrating the relationship between the support substrate and the cap member in the vibration type gyro sensor show in Fig. 28.
[Fig. 30] Fig. 30 shows enlarged sectional side views illustrating the structures of bonding sections between the spring member and the support substrate and between the spring member and the relay substrate in the vibration type gyro sensor shown in Fig. 1.
[Fig. 31] Fig. 31 is a schematic plan view of the bonding sections shown in Fig. 30.
[Fig. 32] Fig. 32 is a sectional view illustrating an example of the structure of the spring member shown in Fig. 30.
[Fig. 33] Fig. 33 shows a sectional side view illustrating a modification of the structures of the bonding sections between the spring member and the support substrate and between the spring member and the relay substrate in the vibration type gyro sensor shown in Fig. 1.
[Fig. 34] Fig. 34 is a schematic plan view of the bonding section shown in Fig. 33.
[Fig. 35] Fig. 35 is a diagram illustrating the relationship between the thickness of the support substrate and the mechanical quality coefficient Q of the vibrating elements in the vibration type gyro sensor shown in Fig. 1.
[Fig. 36] Fig. 36 shows sectional side views in which the height of the vibration type gyro sensor shown in Fig. 1 and the height of the vibration type gyro sensor including the bonding structure shown in Fig. 32 are compared with each other.
[Fig. 37] Fig. 37 is a schematic sectional side view illustrating a modification of the structure of the vibration type gyro sensor including the bonding structure for the spring member shown in Fig. 33.
[Fig. 38] Fig. 38 is a diagram illustrating the relationship between the length (height) of the spring members and the resonance frequency of the spring members in the vibration type gyro sensor shown in Fig. 1.
[Fig. 39] Fig. 39 is a diagram illustrating a modification of the structure of the bonding section shown in Fig. 34.
[Fig. 40] Fig. 40 is a schematic sectional side view illustrating a modification of the structure of the vibration type gyro sensor shown in Fig. 1.
[Fig. 41] Fig. 41 is a schematic side view of the vibrating element included in the vibration type gyro sensor shown in Fig. 1.
[Fig. 42] Fig. 42 is a diagram illustrating the relationship between the magnitude of vibration of a base portion (pedestal) of the vibrating element shown in Fig. 41 and the magnitude of vibration of the support substrate which supports the base portion.
[Fig. 43] Fig. 43 is a diagram illustrating the magnitude of vibration of the base portion (pedestal) in accordance with the difference in the positions of bumps on the vibrating element shown in Fig. 41.
[Fig. 44] Fig. 44 is a schematic sectional side view illustrating the structure of a vibration type gyro sensor according to a second embodiment of the present invention.
[Fig. 45] Fig. 45 is a schematic sectional side view illustrating the structure of another vibration type gyro sensor according to the second embodiment of the present invention.
[Fig. 46] Fig. 46 is a schematic sectional side view illustrating the structure of a vibration type gyro sensor according to a third embodiment of the present invention.
[Fig. 47] Fig. 47 is a sectional plan view schematically illustrating the structure of another vibration type gyro sensor according to the third embodiment of the present invention.
[Fig. 48] Fig. 48 is a schematic sectional side view illustrating the structure of a vibration type gyro sensor according to a fourth embodiment of the present invention.
[Fig. 49] Fig. 49 is a schematic sectional side view illustrating the structure of another vibration type gyro sensor according to the fourth embodiment of the present invention.
[Fig. 50] Fig. 50 is a schematic sectional side view illustrating the structure of still another vibration type gyro sensor according to the fourth embodiment of the present invention.
[Fig. 51] Fig. 51 is a schematic sectional side view illustrating the structure of a vibration type gyro sensor according to a fifth embodiment of the present invention. Best Modes for Carrying Out the Invention

In the following description, each embodiment of the present invention will be described with reference to the drawings. Here, the present invention is not limited to any of the embodiments described below, and various modifications are possible on the basis of the technical idea of the present invention.

### (First Embodiment)

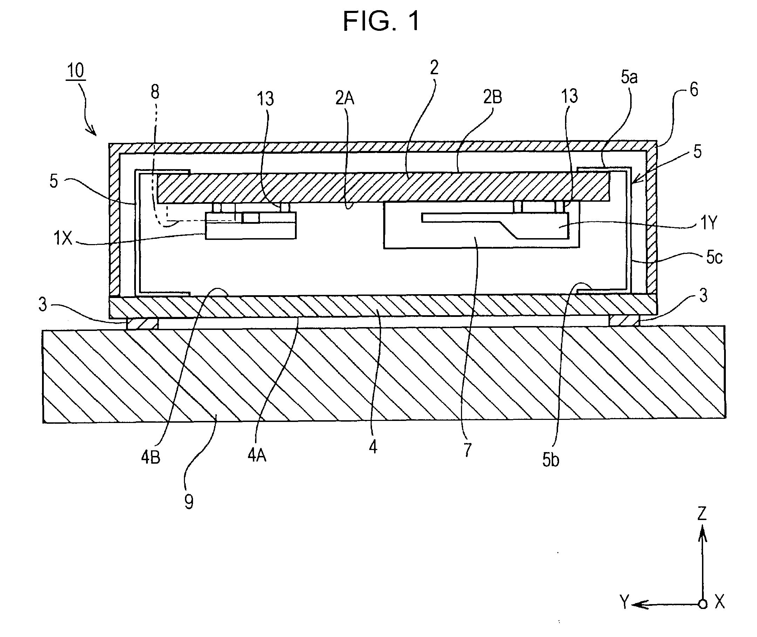

Fig. 1 is a sectional side view schematically illustrating the structure of a vibration type gyro sensor 10 according to a first embodiment of the present invention.

As shown in Fig. 1, the vibration type gyro sensor 10 according to the present embodiment includes a pair of vibrating elements 1X and 1Y; a support substrate 2 which supports the vibrating elements 1X and 1Y; a relay substrate 4 which is electrically connected to the support substrate 2 and which has external connection terminals 3; buffer members 5 disposed between the support substrate 2 and the relay substrate 4 which face each other in a sensor height direction; and a cap member 6 which covers the top surface of the relay substrate 4.

The vibration type gyro sensor 10 according to the present embodiment is mounted in, for example, a video camera to form a motion-blur correction mechanism. Alternatively, the vibration type gyro sensor 10 is used in, for example, a virtual reality apparatus as a motion detection device or in a car navigation system as a direction detection device.

The support substrate 2 is formed of, for example, a ceramic substrate, a glass substrate, or the like. One principal surface (bottom surface in Fig. 1) of the support substrate 2 serves as a component mounting surface 2A on which a wiring pattern including a plurality of lands for mounting the vibrating elements 1X and 1Y, which will be described below, is formed. The pair of vibrating elements 1X and 1Y (hereinafter generically referred to as vibrating elements 1 unless they are explained individually), an IC circuit element 7, and multiple appropriate electronic components 8, such as ceramic capacitors, are mounted together on the component mounting surface 2A. Here, only one of the electronic components 8 is shown in Fig. 1 for simplicity.

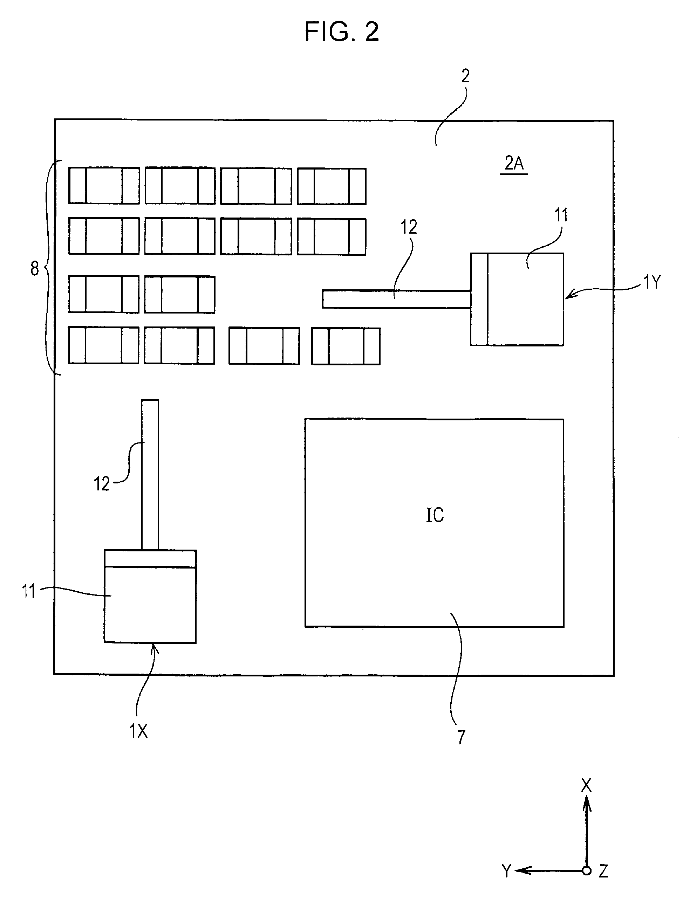

Fig. 2 is a plan view of the component mounting surface 2A of the support substrate 2 seen from above. Although the support substrate 2 has a quadrangular shape, the shape thereof is, of course, not limited to this. A predetermined wiring pattern (not shown) is formed on the component mounting surface 2A of the support substrate 2, and the vibrating elements 1 are flip-chip mounted on the support substrate 2 with the respective bumps 13 (see Fig. 1). According to the present embodiment, the bumps 13 are formed of gold stud bumps, and are bonded to the support substrate 2 by ultrasonic bonding. The vibrating elements 1 are electrically connected to the IC circuit element 7 through the wiring pattern on the support substrate 2.

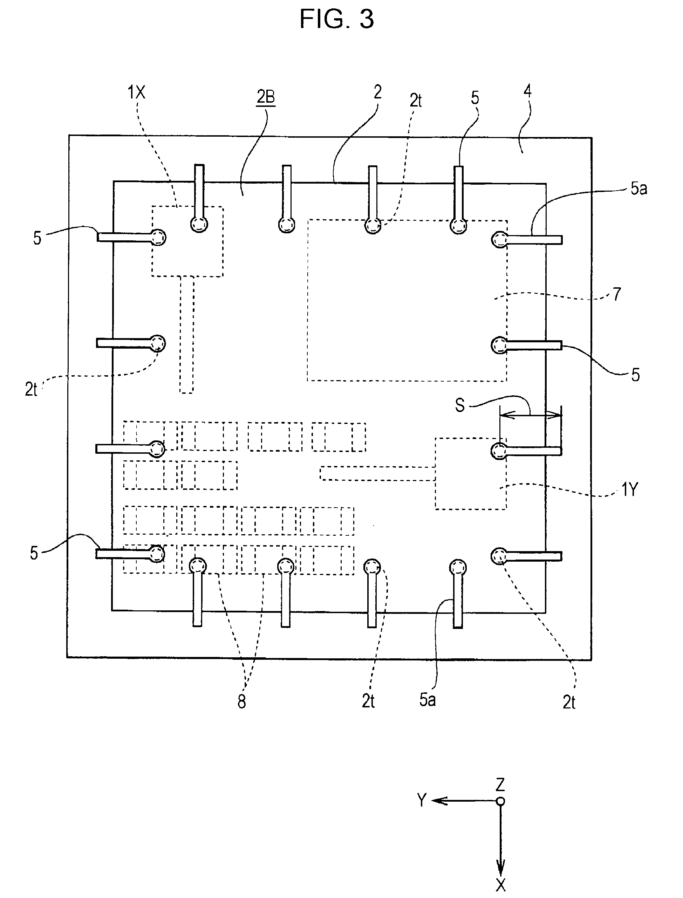

The support substrate 2 is formed as a double-sided wiring board, and the wiring pattern formed on the component mounting surface 2A extends to the other surface (top surface in Fig. 1) of the support substrate 2. Fig. 3 is a plan view of the vibration type gyro sensor 10 shown in Fig. 1 in the state in which the cap member 6 is removed. The surface on the other side of the support substrate 2 is formed as a terminal forming surface 2B. As shown in Fig. 3, a plurality of terminal portions 2t are formed along the periphery of the terminal forming surface 2B. A plurality of buffer members 5, which will be described below, are respectively bonded to the corresponding terminal portions 2t.

The relay substrate 4 is formed of an organic double-sided wiring board made of a material including, for example, a glass epoxy material as a base material. The external connection terminals 3 are arranged on one surface (bottom surface in Fig. 1) 4A of the relay substrate 4. The vibration type gyro sensor 10 is electrically and mechanically connected to an external control substrate 9 through the external connection terminals 3. The control substrate 9 is a wiring board on which input-output wires for the vibration type gyro sensor 10 is formed, and is mounted in an electronic device, such as a video camera. Although not shown in the figure, not only the vibration type gyro sensor 10 but also other electric and electronic components are mounted on the control substrate 9. The various kinds of components on the control substrate 9 are simultaneously soldered by being placed in, for example, a reflow oven.

The other surface (top surface in Fig. 1) 4B of the relay substrate 4 supports the support substrate 2 and serves as a terminal forming surface which is electrically connected to the support substrate 2. The support substrate 2 is supported by the buffer members 5 on the terminal forming surface 4B of the relay substrate 4. As described below, the buffer members 5 are formed of a conductive material, and terminal portions (not shown) which are electrically connected to the external connection terminals 3 are individually formed on the terminal forming surface 4B in areas where the buffer members 5 come into contact therewith.

In the present embodiment, the buffer members 5 are formed of spring members which elastically support the support substrate 2 with respect to the relay substrate 4. In addition, the buffer members 5 also function as wiring members which electrically connect the support substrate 2 and the relay substrate 4 to each other. Thus, the number of components is reduced. The material of the buffer members 5 is not particularly limited as long as spring characteristics and conductivity are provided, and a metal material is preferably used. In particular, in the present embodiment, spring members made of phosphor bronze are used. Here, in the following explanations, the buffer members 5 are referred to as "spring members 5".

The spring members 5 have an angular U-shape and include first arm portions 5a bonded to the terminal portions 2t formed on the terminal forming surface 2B of the support substrate 2, second arm portions 5b bonded to the terminal portions formed on the terminal forming surface 4B of the relay substrate 4, and connecting portions 5c which connect the first and second arm portions 5a and 5b to each other. The shape of the buffer members 5 is, of course, not limited to the above-described angular U-shape, and may also be, for example, an L-shape, Γ-shape, or I-shape in which one or both of the above-described first and second arm portions 5a and 5b are omitted. Each of the arm portions 5a and 5b may be bonded to the corresponding terminal portion using a conductive bonding material, such as conductive paste or solder. In the present embodiment, Ag (silver) paste is used.

The spring members 5 serve a function of suppressing the transmission of strain and vibration between the support substrate 2 and the relay substrate 4. More specifically, the spring members 5 serve a function of reducing the strain transmitted from the relay substrate 4 to the support substrate 2 and a function of preventing the vibration of the vibrating elements 1 on the support substrate 2 from being transmitted to the relay substrate 4. Therefore, the spring members 5 are structured so as to form a vibrating system which shows absorption at the driving frequency of the vibrating elements 1.

According to the present embodiment, the driving resonance frequency of one vibrating element 1X is 36 kHz and the driving resonance frequency of the other vibrating element 1Y is 39 kHz. In addition, each spring member 5 is a leaf spring made of phosphor bronze and has a thickness of 50 µm and a width of 100 µm. As described below, the resonance frequency of each spring member 5 is set to 1/5 or less (about 7 kHz or less in this example) of the driving frequencies of the vibrating elements 1X and 1Y.

The cap member 6 is provided to shield the support substrate 2 supported on the relay substrate 4 and the vibrating elements 1, the IC circuit element 7, the electronic components 8, etc. mounted on the support substrate 2 from the outside. Side wall portions of the cap member 6 are tightly fixed to the periphery of the terminal forming surface 4B of the relay substrate by adhesion, fitting, or other means. In particular, according to the present embodiment, the thickness of the vibration type gyro sensor 10 is reduced by placing the component mounting surface 2A of the support substrate 2 and the terminal forming surface 4B of the relay substrate 4 so as to face each other.

Although the material of the cap member 6 is not particularly limited, at least a portion thereof is preferably made of a conductive material so as to provide an electromagnetic shield function. In the present embodiment, the cap member 6 is formed of a press-formed body made of a conductive plate member, such as a stainless steel plate and an aluminum plate. The cap member 6 is connected to a ground terminal on the control substrate 9 so as to provide a predetermined electromagnetic shield function.

In addition, to enhance the electromagnetic shield function of the vibration type gyro sensor 10, preferably, the relay substrate 4 to which the cap member 6 is attached also provides a shielding function. More specifically, a portion of an inner wiring layer of the relay substrate 4 formed of a multilayer substrate is formed as a shield layer over the entire area or in a mesh pattern, and the shield layer is connected to the ground potential on the control substrate 9. Accordingly, the vibration type gyro sensor 10 which is not easily influenced by electromagnetic waves from the outside can be provided. Here, a similar shield layer may be provided in the support substrate 2 instead of the relay substrate 4 or in addition to the relay substrate 4.

According to the experiments performed by the inventors of the present invention, in the case where neither of the cap member and the relay substrate had a shield structure, noise (final amplifier output) was 0.97 to 1.02 Vp-p. In comparison, it was confirmed that the noise could be reduced to 0.17 to 0.25 Vp-p in the case where only the relay substrate had a shield structure, and to 0.02 to 0.04 Vp-p in the case where only the cap member had a shield structure. Furthermore, in the case where each of the cap member and the relay substrate had a shield structure, the noise was reduced to 0.02 to 0.03 Vp-p.

Also, to prevent the cap member 6 from resonating with the vibration of the vibrating elements 1 and causing external stain and noise, the resonance frequency of the cap member 6 is set to be higher or lower than the driving resonance frequencies of the vibrating elements 1 by 5 kHz or more.

Next, the structure of the vibrating elements 1 will be described.

The vibrating elements 1 include base portions 11 supported on the support substrate 2 and vibrator portions 12 which have a cantilever structure and which are formed integrally with the base portions 11 so as to project from a peripheral side thereof. The individual vibrating elements 1X and 1Y are mounted such that the vibrator portions 12 thereof extend in different directions. In the present embodiment, the individual vibrating elements 1X and 1Y are arranged such that the vibrator portions 12 thereof extend perpendicular to each other. More specifically, one vibrating element 1X is disposed such that the axial direction of the vibrator portion 12 extends in the X-axis direction, and the other vibrating element 1Y is disposed such that the axial direction of the vibrator portion 12 extends in the Y-axis direction.

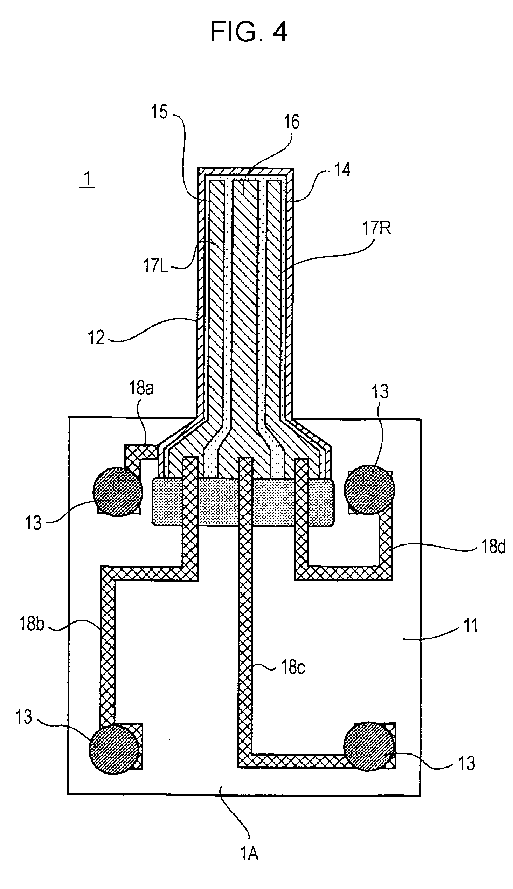

Fig. 4 is a back side view schematically illustrating the structure of the vibrating element 1. The vibrating element 1 is formed of silicon single crystal. A plurality of vibrating elements are simultaneously manufactured using a single silicon waver, and then are cut into the shape shown in the figure. As shown in Fig. 4, a reference electrode layer 14, a piezoelectric thin-film layer 15, a driving electrode 16, left and right detection electrodes 17L and 17R, lead wire portions 18a, 18b, 18c, and 18d, etc., are individually formed on a substrate facing surface 1A of the vibrating element 1 which faces the component mounting surface 2A of the support substrate 2.

The reference electrode layer 14 is formed over substantially the entire area of the vibrator portion 12 and a partial area of the base portion 11, and is made of, for example, a sputtered film stack of Ti (titanium) and Pt (platinum). The piezoelectric thin-film layer 15 is formed over substantially the entire area of the region where the reference electrode layer 14 is formed, and is made of, for example, a sputtered film of PZT (lead zirconate titanate). The driving electrode 16 and the left and right detection electrodes 17L and 17R are made of, for example, a patterned body of a Pt sputtered film formed on the piezoelectric thin-film layer 15. The driving electrode 16 is formed in a central section of the vibrator portion 12 along the axial direction thereof, and the left and right detection electrodes 17L and 17R are formed such that the driving electrode 16 is disposed between them with predetermined intervals. Each of the lead wire portions 18a to 18d is formed of, for example, a film stack of Ti and Cu (copper) formed on the base portion 11 in a certain pattern. The lead wire portions 18a to 18d electrically connect the reference electrode layer 14, the driving electrode 16, and the left and right detection electrodes 17L and 17R to the respective bumps 13 to each other.

The reference electrode layer 14 is connected to a predetermined reference potential (for example, ground potential), and a driving alternating voltage at a predetermined voltage is applied to the driving electrode 16 from the IC circuit element 7. Accordingly, the vibrator portion 12 is vibrated by the inverse piezoelectric effect of the piezoelectric thin-film layer 15 disposed between the reference electrode layer 14 and the driving electrode 16. At this time, as the vibrator portion 12 vibrates, the detection electrodes 17L and 17R detect the values of voltages generated by the piezoelectric effect of the piezoelectric thin-film 15 and supply the detected values to the IC circuit element 7. In the case where no angular velocity is generated around the vibrator portion 12, outputs from the detection electrodes 17L and 17R are equal to each other or substantially equal to each other.

On the other hand, when an angular velocity is generated around the longitudinal direction of the vibrator portion 12, the vibrating direction of the vibrator portion 12 changes due to the Coriolis force. In such a case, the output of one of the detection electrodes 17L and 17R increases while the output of the other decreases. An amount of change in one of the outputs or each of the outputs is detected and measured by the IC circuit element 7, and thus the input angular velocity around the longitudinal direction of the vibrator portion 12 is detected. According to the present embodiment, the respective vibrator portions 12 of the vibrating elements 1X and 1Y are disposed so as to extend in the X-axis direction and the Y-axis direction, respectively. Therefore, the angular velocity around the X axis and the angular velocity around the Y axis can be simultaneously detected by the vibration type gyro sensor 10.

In the vibration type gyro sensor 10 according to the present embodiment, which is structured as described above, the support substrate 2 on which the vibrating elements 1 are mounted is elastically supported on the relay substrate 4 by the spring members 5. Therefore, the strain generated in the relay substrate 4 can be prevented from being transmitted to the support substrate 2. Accordingly, the strain generated in the relay substrate 4 in the process of, for example, reflow-soldering the vibration type gyro sensor 10 on the control substrate 9 can be reduced due to elastic deformation of the buffer members 5, and the vibration characteristics of the vibrating elements 1 on the support substrate 2 can be stabilized.

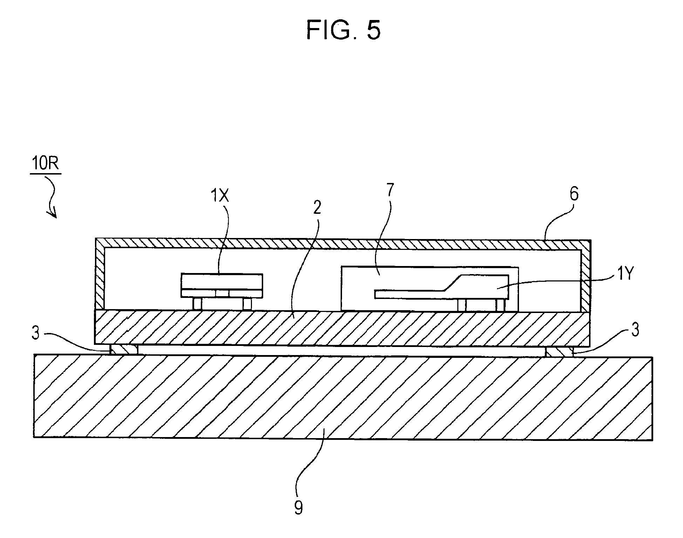

Next, the operational effects obtained by the vibration type gyro sensor 10 according to the present embodiment will be explained by comparing the vibration type gyro sensor 10 with a vibration type gyro sensor 10R having the structure shown in Fig. 5. Here, Fig. 5 illustrates the structure of the vibration type gyro sensor 10R in which the support substrate 2, which supports the vibrating elements 1, is directly mounted on the control substrate 9. Here, components shown in Fig. 5 that correspond to those in Fig. 1 are denoted by the same reference numerals, and detailed explanations thereof are omitted.

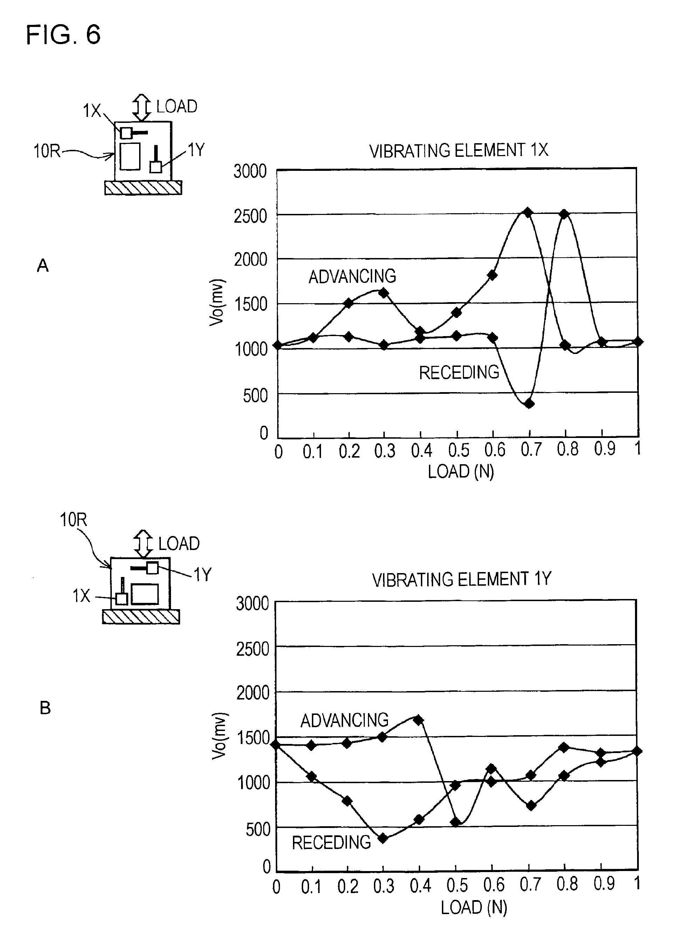

Figs. 6A and 6B show the manner in which the offset voltages of the vibrating elements 1X and 1Y vary when one of the peripheral sides of the vibration type gyro sensor 10R is fixed and a load is applied to the peripheral side opposite thereto. In Figs. 6A and 6B, variation in the direction in which the load is applied is indicated as "advancing", and variation in the direction in which the load is removed is indicated as "receding". The magnitude of the applied load is confirmed to be equal to the strain stress generated in the support substrate 2 in the mounting process. The offset voltage V0 is the driving voltage applied to the driving electrodes 16 of the vibrating elements 1, and means the voltage difference with respect to the reference potential connected to the reference electrode layer 14. If the offset voltage is constant, the vibration characteristics of the vibrating elements 1 are maintained stable. Here, in the example shown in the figure, the set value of the offset voltage differs between the vibrating elements 1X and 1Y.

As shown in Figs. 6A and 6B, in the vibration type gyro sensor 10R shown in Fig. 5, the offset voltages V0 of the vibrating elements 1X and 1Y largely vary when the load is applied, and the variation occurs suddenly. This is considered to be because strain is generated in the support substrate 2 when the load is applied, and the thus-generated strain is transmitted to the vibrating elements 1 and induces deformation of the piezoelectric thin-film layers, which leads to the variation in the set offset voltages. In general, the substrate is heated to about 250°C in reflow soldering. In the case where the support substrate 2 is directly mounted on the control substrate 9, strain is easily generated in the support substrate 2 due to the influence of the difference in coefficient of thermal expansion between the support substrate 2 and the control substrate 9. Therefore, in the structure of the vibration type gyro sensor 10R shown in Fig. 5, the vibration characteristics of the vibrating elements 1 after the process of mounting the vibration type gyro sensor 10R on the control substrate 9 differ from those before the mounting process. As a result, there is a risk that desired performance cannot be obtained.

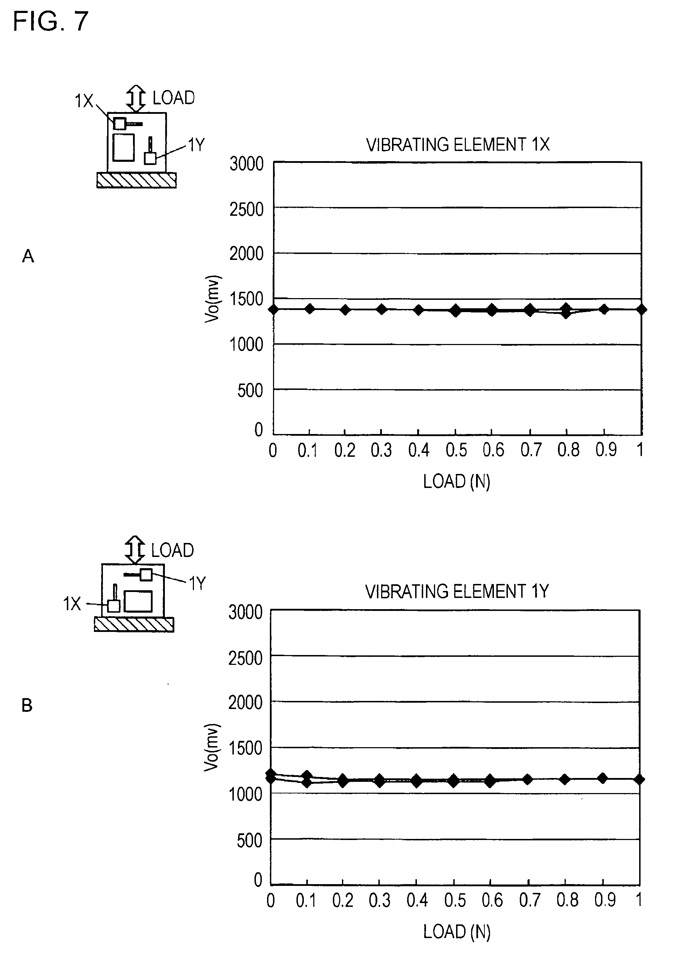

In comparison, Figs. 7A and 7B show the measurement results obtained when the evaluation of load-Vo characteristics similar to that shown in Fig. 6 is performed for the vibration type gyro sensor 10 shown in Fig. 1. As shown in Figs. 7A and 7B, variation in the offset voltages V0 of the vibrating elements 1X and 1Y barely occurs, and the variation is within ±50 mV or less with respect to the set value. In the structure of the vibration type gyro sensor 10 according to the present embodiment, the relay substrate 4 on which the support substrate 2 is supported by the buffer members 5 is provided, and the relay substrate 4 is mounted on the control substrate 9. Therefore, although strain is generated in the relay substrate 4 in the reflow mounting process due to the difference in coefficient of thermal expansion between the relay substrate 4 and the control substrate 9, the generated stain is reduced due to the elastic deformation of the buffer members 5, and is not transmitted to the support substrate 2. Therefore, the vibrating elements 1X and 1Y mounted on the support substrate 2 provide stable vibration characteristics without being influenced by external stress. In addition, the vibration characteristics of the vibration type gyro sensor 10 after the process of mounting it on the control substrate 9 can be prevented from being changed from those before the mounting process.

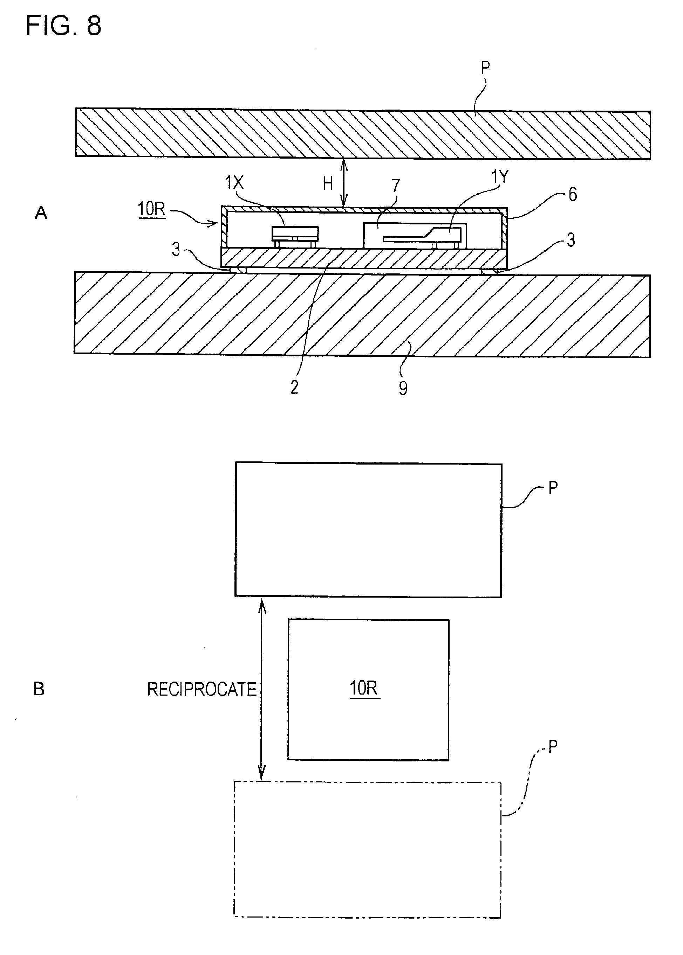

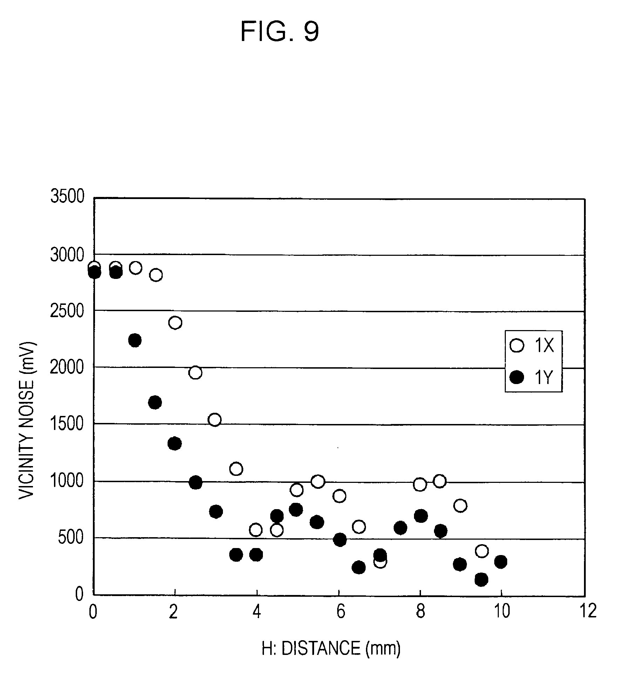

Next, as shown in Figs. 8A and 8B, the vibration type gyro sensor 10R shown in Fig. 5 was driven and a shielding object P was caused to reciprocate above the sensor 10R in the driven state. Then, variation in disturbance noise obtained in this state was evaluated. An aluminum plate was used as the shielding object P, and the shielding object P was caused to reciprocate, as shown in Fig. 8B, at about 1 Hz at a position above the sensor 10R and spaced from the surface thereof by a predetermined distance H. Then, the maximum value of magnitude of noise included in the output of the sensor 10R obtained when the sensor 10R is covered with the shielding object P was measured. The measurement result is shown in Fig. 9. The horizontal axis shows the distance H and the vertical axis shows the magnitude of noise (amplification value).

As shown in Fig. 9, due to the resonance frequencies of the vibrating elements 1X and 1Y, the noise is increased at distances substantially corresponding to integral multiples of half wavelengths. This is considered to be due to the influence of leakage of vibration due to the resonance of the vibrating elements 1. More specifically, in the vibration type gyro sensor 10R having the structure shown in Fig. 5, the support substrate 2 which supports the vibrating elements 1 is directly mounted on the control substrate 9. Therefore, the resonant vibration of the vibrating elements 1 is transmitted to the control substrate 9 through the support substrate 2 and the external connection terminals 3. Then, the vibration of the control substrate 9 is transmitted to the shielding object P positioned thereabove, is reflected by the surface of the shielding object P, and is input to the vibrating elements 1 again. As a result, the thus input vibration components are included in the sensor outputs.

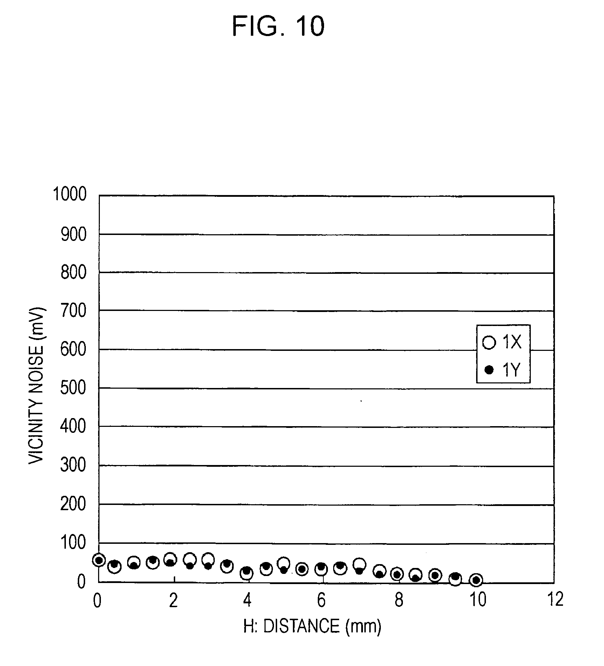

In comparison, Fig. 10 shows the measurement result obtained when the evaluation of the amount of noise similar to that shown in Fig. 8 is performed for the vibration type gyro sensor 10 shown in Fig. 1. As shown in Fig. 10, the amount of noise barely increases irrespective of the distance H at which the shielding object P is disposed. In the vibration type gyro sensor 10 according to the present embodiment, the relay substrate 4 on which the support substrate 2 is supported by the spring members 5 is provided, and the relay substrate 4 is mounted on the control substrate 9. Therefore, the resonant vibration of the vibrating elements 1 is absorbed by the vibration of the spring members 5, and transmission of the vibration to the relay substrate 4 and the control substrate 9 can be suppressed. Accordingly, the resonant vibration of the vibrating elements 1 can be prevented from leaking to the outside, so that variation or increase in the amount of noise due to the reflection of the vibration can be suppressed. In addition, even when a movable component, such as a zoom mechanism of a camera lens, is mounted on the control substrate 9 or is placed in the vicinity thereof, vibration characteristics of the vibrating elements can be prevented from being varied due to the movement of the movable component and the detection output can be prevented from being reduced due to a reduction in S/N. As a result, the angular velocity detection can be performed with high accuracy.

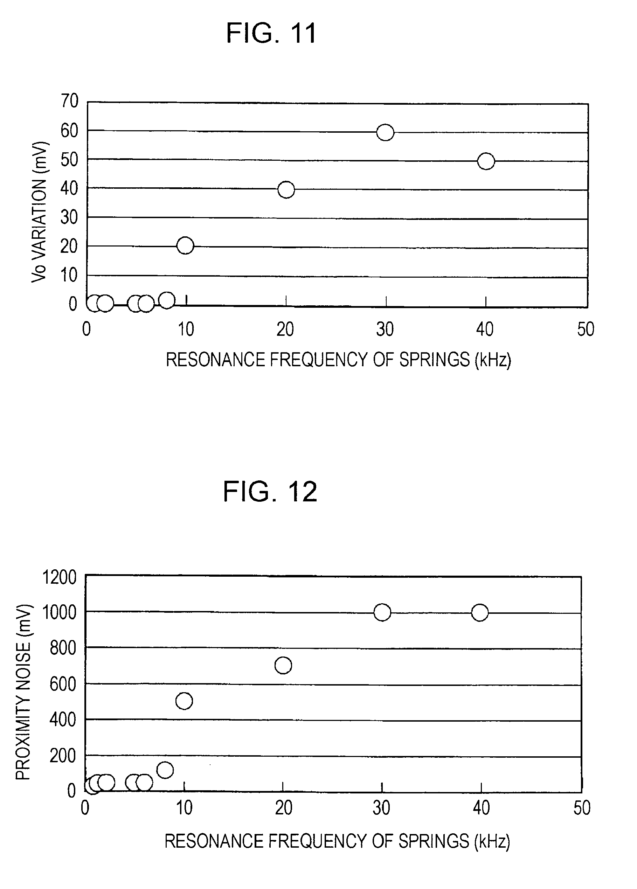

Next, Fig. 11 shows the relationship between the resonance frequency of the spring members 5 in the Z-axis direction which is perpendicular to the mounting surface of the vibrating elements 1 and the variation in the offset voltage Vo of the vibrating elements 1 from the set value thereof measured in the manner shown in Figs. 7A and 7B. In addition, Fig. 12 shows the relationship between the resonance frequency of the spring members 5 in the Z-axis direction and the vicinity noise measured in the manner shown in Fig. 8. Here, samples of the spring members 5 used in the experiment were phosphor bronze springs having a thickness of 50 µm and a width of 100 µm.

As is clear form Fig. 11 and Fig. 12, when the resonance frequency of the spring members 5 is 10 kHz or more, the variation in the offset voltage and the vicinity noise suddenly increase. This shows that if the spring constant of the spring members 5 increases, the function of suppressing the transmission of strain to the support substrate 2 and the function of suppressing the transmission of resonance vibration of the vibrating elements 1 to the relay substrate 4 are degraded and stable vibration characteristics and output characteristics cannot be obtained. For the above-described reasons, the resonance frequency of the spring members 5 is set to 10 kHz or less, preferably 7 kHz or less, so that the influence of variation in the offset voltage due to the transmission of strain and the influence of vicinity noise due to the leakage of vibration can be avoided.

Here, the resonance frequency of the spring members 5 set to 7 kHz or less corresponds to 1/5 or less of the driving frequency of the vibrating elements 1. Therefore, the resonance frequency of the spring members 5 can be set in accordance with the driving frequency of the vibrating elements 1. In addition, if the spring components 5 have constant thickness and width, the resonance frequency thereof can be set by adjusting the elongation length of the spring members 5 (length of the connecting portions 5c).

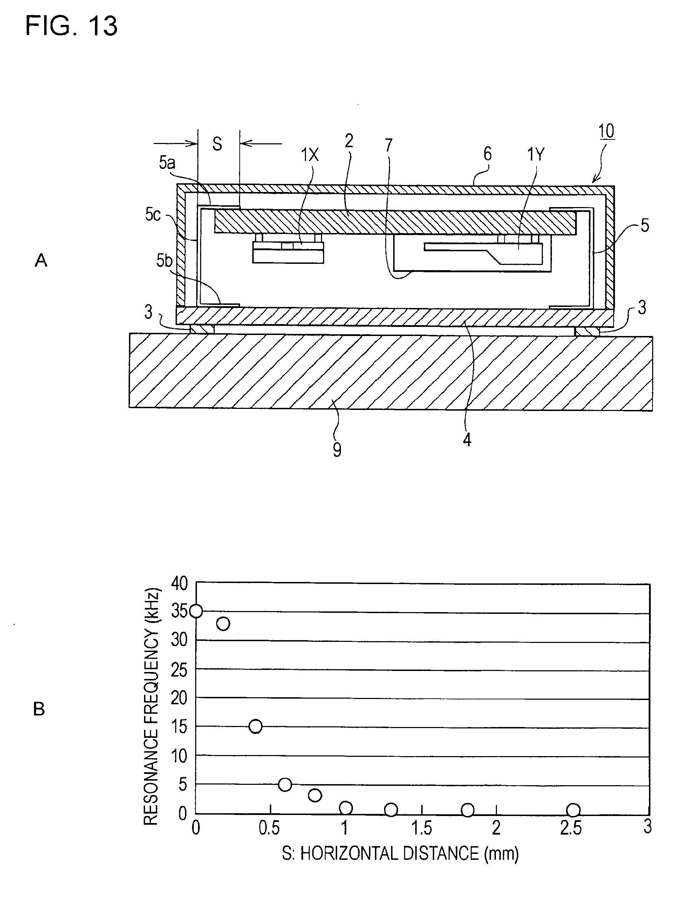

In addition, with regard to the resonance frequency of the spring members 5, not only the resonance frequency in the above-described Z-axis direction but also the resonance frequencies in the X-axis and Y-axis directions parallel to the mounting surface of the vibrating elements 1 must also be considered. Fig. 13B shows the relationship between the horizontal distance S of the buffer members 5 and the resonance frequency thereof. As shown in Fig. 13A, the horizontal distance S of the buffer members 5 is substantially equal to the length of the first arm portions 5a of the spring members 5. More specifically, as shown in Fig. 3, the horizontal distance S is the distance S between the tip end portions of the first arm portions 5a that are bonded to the terminal portions 2t and the base end portions (end portions at the connecting-portion-5c side) of the first arm portions 5a.

As is clear from Fig. 13B, as the horizontal distance S increases, the resonance frequency of the spring members 5 decreases. For the above-described reason, it is necessary to set the resonance frequency of the spring members 5 to 10 kHz or less in order to avoid the influence of variation in the offset voltage due to the transmission of strain and the influence of vicinity noise due to the leakage of vibration. It can be understood that, to satisfy the above-mentioned condition, the horizontal distance S is preferably set to 0.5 mm or more. Here, the above-mentioned value differs in accordance with the selected material and shape of the springs. Therefore, it is necessary to determine the optimum value in accordance with the selected springs.

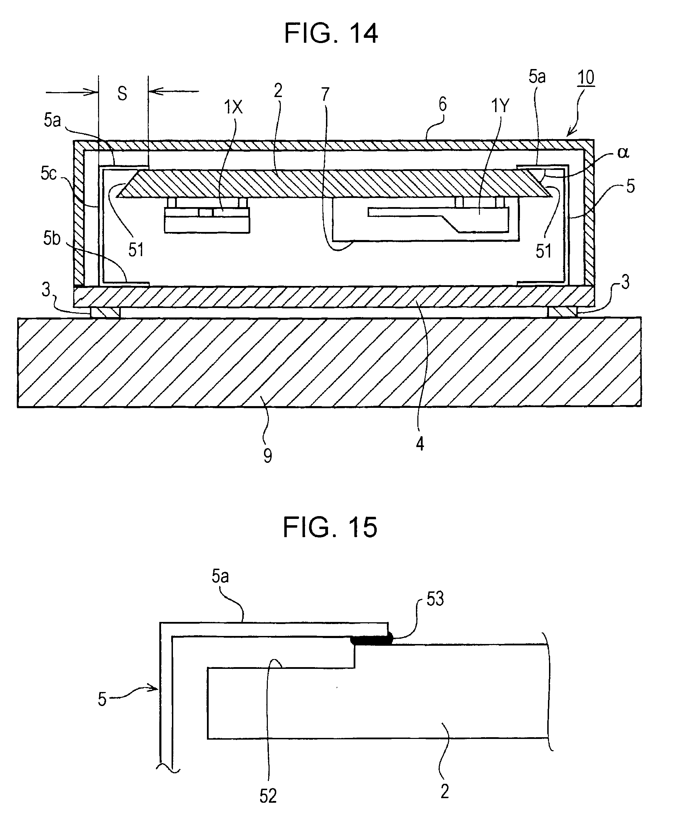

In addition, there is a risk that edge portions of the support substrate 2 will come into contact with the first arm portions 5a of the spring members 5 due to, for example, vibration of the support substrate 2 and the manner in which the first arm portions 5a vibrate will change. In this case, it is effective to form tapered cut-off portions 51 at the edge portions of the support substrate 5, as shown in Fig. 14, so that the peripheral edge portions of the support substrate 2 are prevented from coming into contact with the spring members 5 while the sensor is driven. Thus, since the horizontal distance S of the spring members 5 can be ensured, stable strain suppressing function and vibration suppressing function can be provided by the spring members 5 and the production yield can be improved.

The taper angle of the cut-off portions 51 can be adjusted by the clearance between the surface of the support substrate 2 and the first arm portions 5a of the spring members 5 before the cut-off portions 51 are formed. The clearance is determined by the bonding thickness of a conductive bonding material (for example, silver paste) for bonding the support substrate 2 and the spring members 5 to each other. More specifically, in the case where the above-mentioned clearance is 300 µm, the taper angle of the cut-off portions 51 (angle α between the cut-off portions 51 and the first arm portions 5a) is, for example, about 15° to 30°. In addition, with regard to the method for forming the cut-off portions 51, adjustment can be easily made in accordance with the taper angle of a rotating grindstone in the process of dicing (cutting out) the support substrate 2.

The cut-off portions are not limited to those having the tapered shape. For example, as shown in Fig. 15, a step-shaped cut-off portion 52 may be formed in the surface of the support substrate 2. Also in this case, effects similar to the above-described effects can be obtained.

Furthermore, since the above-described cut-off portions are provided, variation in the horizontal distance S of the spring members due to an unintended increase in the bonding area of the conductive bonding material for bonding the support substrate to the spring members can be prevented. More specifically, as shown in Fig. 15, for example, the cut-off portion 52 is positioned closer to the edge portion of the support substrate 2 than the bonding position between the support substrate 2 and the spring member 5. Therefore, in the case where the amount of application of bonding material 53 is large, excess bonding material can be placed in the recess 52, so that variation in the horizontal distance S of the spring member 5 due to the increase in the bonding area can be prevented. Here, from the viewpoint of preventing the bonding material 53 from flowing out, the recess (52) is not limited to the step-shaped recess as shown in Fig. 15, and may also be a groove portion.

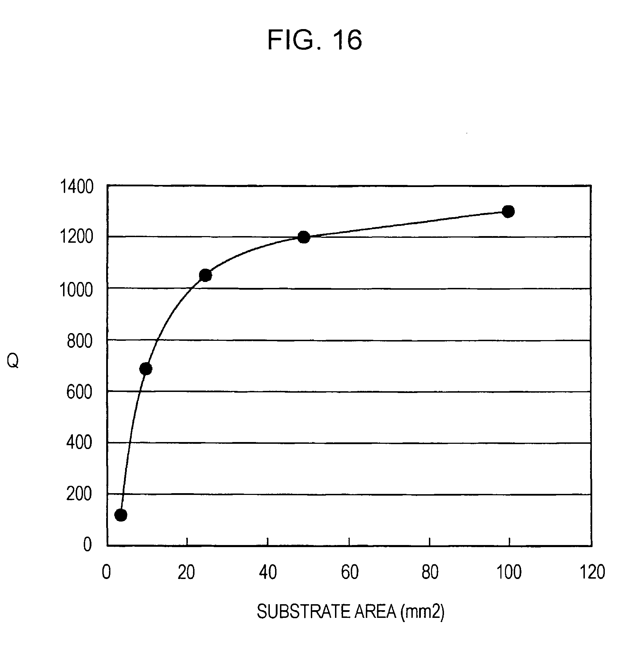

In addition, in the vibration type gyro sensor 10 according to the present embodiment, it is necessary that the support substrate 2 which supports the vibrating elements 1 be formed of a material rigid enough to ensure a Q-value (mechanical quality factor) of a certain level or more when the vibrating elements 1 are in the resonant state. According to the present embodiment, an alumina ceramic substrate is used as the support substrate 2. Fig. 16 shows the relationship between the substrate area and the Q-value when the support substrate 2 having a thickness of 0.5 mm is used. At this thickness, the Q-value is 1000 or more when the area is 5 mm square (25 mm²).

Next, the detailed structure of each component included in the above-described vibration type gyro sensor 10 according to the first embodiment of the present invention will be further explained.

### (Arrangement of Spring Members)

As described above, the spring members 5, which function as the buffer members according to the present invention, have a function of suppressing the transmission of strain and vibration between the support substrate 2 and the relay substrate 4. More specifically, the spring members 5 have a function of reducing the strain transmitted from the relay substrate 4 to the support substrate 2 and a function of preventing the transmission of vibration of the vibrating elements 1 on the support substrate 2 to the relay substrate 4.

Here, the spring members 5 are bonded to the periphery of the support substrate 2, thereby forming a support structure for supporting the support substrate 2 on the relay substrate 4. Depending on the positions where the spring members 5 are bonded, there is a risk that they will be twisted in a direction such that the support substrate 2 will be rotated with respect to the relay substrate 4 due to the strain generated in the relay substrate 4 or external force, such as acceleration. More specifically, when the spring members 5 absorb the external force applied to the control substrate 9 or the relay substrate 4 to prevent the transmission thereof to the support substrate 2, there is a risk that the spring members 5 will be twisted and the support substrate 2 will rotate depending on the direction in which the external force is applied. In such a case, an angular velocity corresponding to the amount of rotation of the support substrate 2 will be detected even if no angular velocity is generated.

An example of arrangement of the spring members 5 for suppressing this phenomenon will now be described.

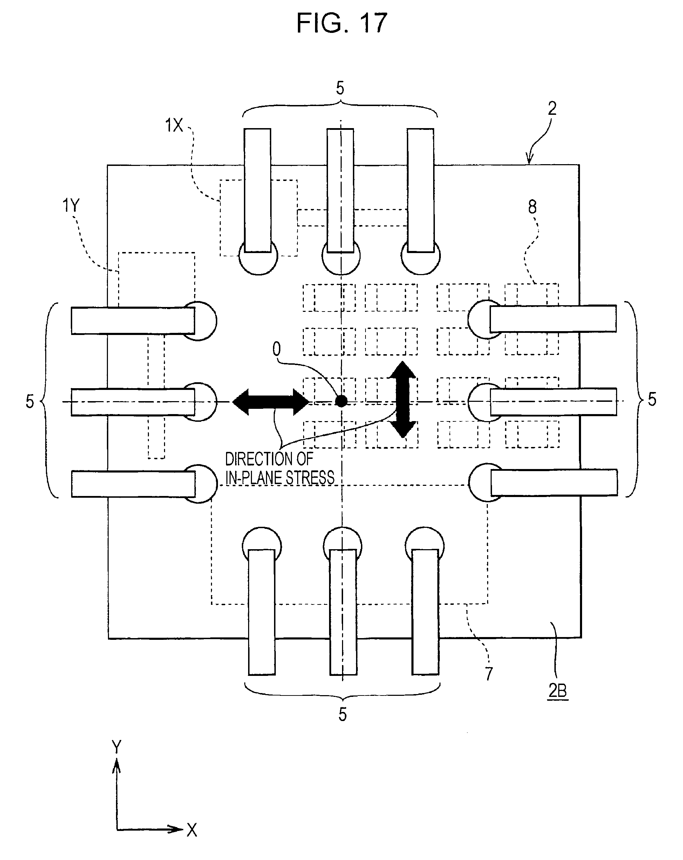

Fig. 17 is a schematic plan view of the terminal forming surface 2B of the support substrate 2. Here, the number of spring members 5, the manner in which various kinds of components are mounted on the support substrate 2, etc., do not necessarily correspond to those shown in Fig. 3. In the example shown in Fig. 17, the support substrate 2 has a square shape and the spring members 5 are individually arranged at positions symmetrical to one another about two orthogonal axes (X axis and Y axis) that pass through the center of the support substrate 2 in the plane thereof. The arrangement in which the spring members 5 are symmetrical to one another about the X axis and Y axis means that all of the numbers of spring members 5, the intervals therebetween, the terminal bonding positions, etc., are symmetrical about the X axis and Y axis.

This allows the in-plane stress in the X-axis direction to be absorbed by the spring members 5 extending in the horizontal direction (left-right direction in Fig. 17) which are arranged symmetrical to each other about the Y axis, and the in-plane stress in the Y-axis direction to be absorbed by the spring members 5 extending in the vertical direction (up-down direction in Fig. 17) which are arranged symmetrical to each other about the X axis. In addition, the in-plane stress in the oblique direction can be absorbed by the spring members 5 arranged symmetrical to each other in the horizontal direction and the vertical direction in a balanced manner, and the rotation of the support substrate 2 relative to the relay substrate 4 can be suppressed.

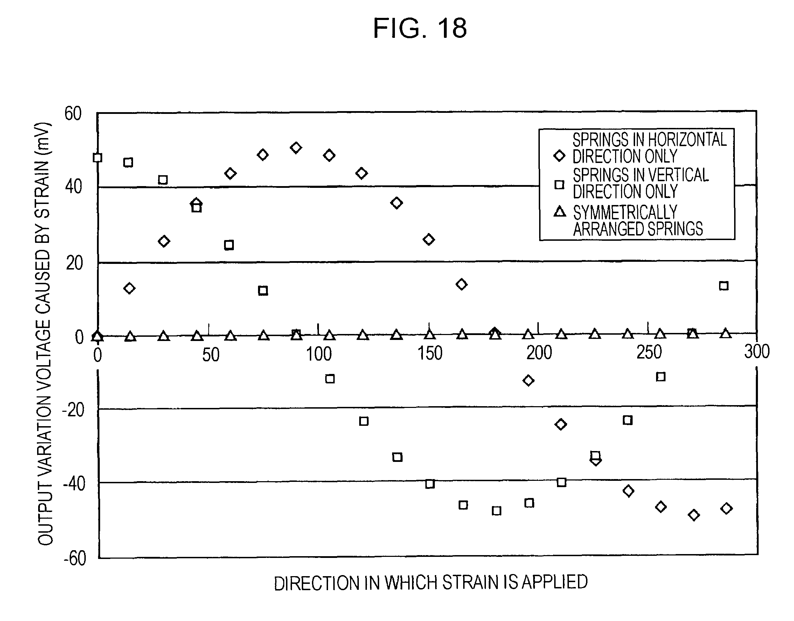

Fig. 18 shows the variation in the outputs from the vibrating elements 1 (1X and 1Y) when the strain of 1 N (Newton) is applied to the support substrate 2 while changing the direction of the strain. Here, a sample in which the spring members 5 are arranged symmetrical to each other only in the horizontal direction, a sample in which the spring members 5 are arranged symmetrical to each other only in the vertical direction, and a sample in which the spring members 5 are arranged symmetrical to each other in both the horizontal and vertical directions were used. The output variation corresponds to the angular velocity output due to the rotation of the support substrate 2 caused by the application of the strain. As the variation voltage increases, the rotational angular velocity of the support substrate 2 increases.

As is clear from the result shown in Fig. 18, for the sample in which the spring members 5 are arranged only in the horizontal direction and the sample in which the spring members 5 are arranged only in the vertical direction, the output variation voltage largely depends on the direction in which the strain is applied. However, for the sample in which the spring members 5 are arranged symmetrical to each other in the horizontal and vertical directions, output variation barely occurred irrespective of the direction in which the strain is applied.

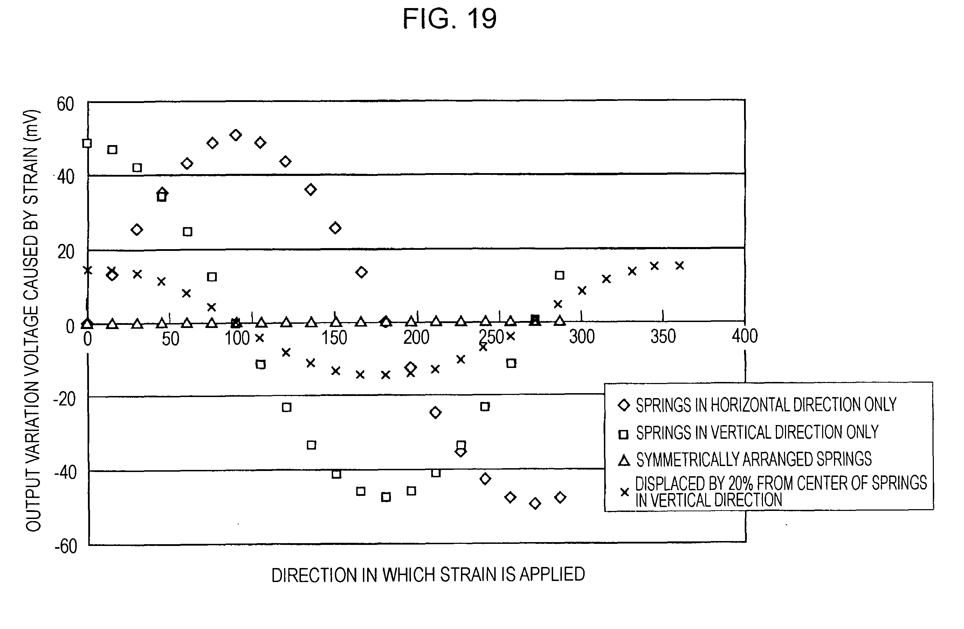

In addition, the effect of suppressing the rotation of the support substrate 2 relative to the relay substrate 4 can be improved by arranging the support substrate 2 such that the center O thereof corresponds to the center position of the relay substrate 4. In addition, it has been found that the output variation of the sensor can be effectively suppressed by arranging the spring members 5 symmetrical to each other such that the center thereof corresponds to the center O of the support substrate 2. Fig. 19 shows the relationship between the direction in which the strain is applied and the output variation in the case where the center position of the spring members 5 in the vertical direction is displaced by a distance corresponding to 20% of the width of the support substrate from the substrate center O. As shown in Fig. 19, the output variation of ±20 mV occurs, and the output variation tends to increase as the displacement from the center O increases.

On the other hand, it has been found that, depending on the magnitude of displacement between the position of center of gravity of the support substrate determined by the weight distribution of various kinds of components mounted on the support substrate 2 and the position of center of rigidity determined by the arrangement of the spring members 5, the support substrate 2 rotates when the strain is applied. Here, the center of rigidity means the center of force that swings the support substrate 2. Even if an angle of such rotation is small, an angular displacement per unit time increases as the vibration frequency increases and a large angular velocity is generated as a result.

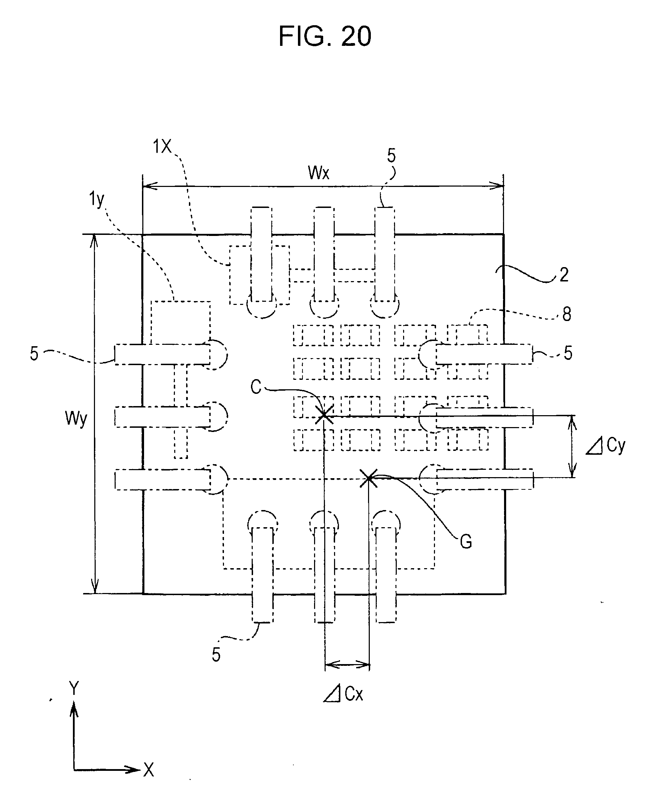

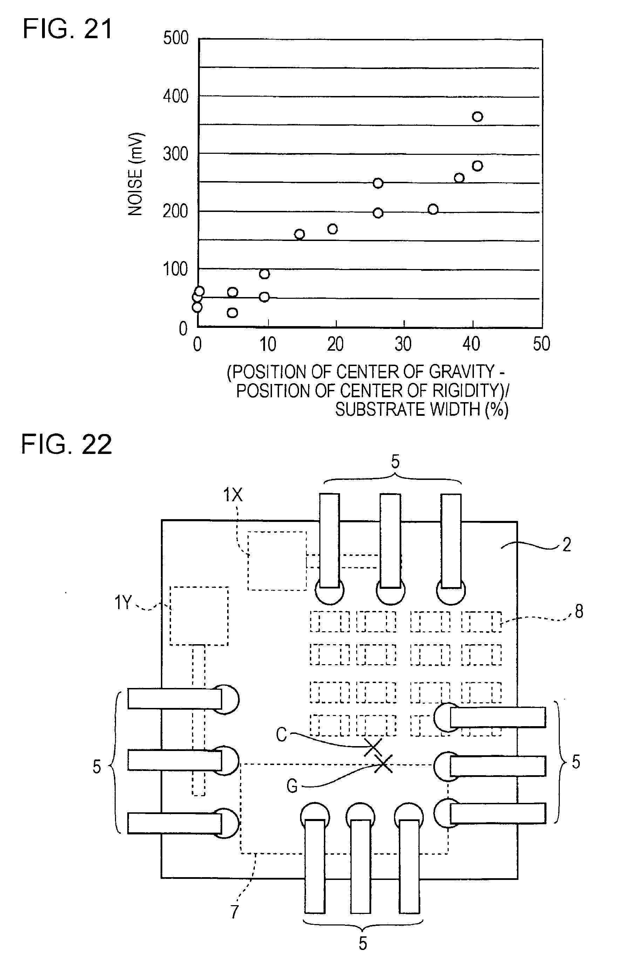

Accordingly, as shown in Fig. 20, the position of center of gravity of the support substrate 2 determined by the weight balance of the components on the support substrate 2 is denoted by G, the center of rigidity determined by the rigidity balance of the spring members 5 which support the support substrate 2 is denoted by C, the ratio of the displacement of the center of rigidity C from the center of gravity G in the X-axis direction relative to the substrate width Wx in the X-direction is denoted by ΔCx, and the ratio of the displacement of the center of rigidity C from the center of gravity G in the Y-axis direction relative to the substrate width Wy in the Y-direction is denoted by ΔCy. The outputs of the vibrating elements 1 (1X and 1Y) in response to translation vibration of the support substrate 2 were observed while changing the magnitudes of ΔCx and ΔCy. As a result, as shown in Fig. 21, it was found that the amount of noise suddenly increases when ΔC/W exceeds 15% for each of ΔCx and ΔCy. The amount of noise includes the sensor output generated when the support substrate 2 is rotated due to the external force, and the influence of the external force increases as the value of ΔC/W increases, that is, as the displacement between the center of gravity G and the center of rigidity P increases.

The above-described result shows that, by arranging the spring members 5 such that the center of rigidity of the support substrate 2 supported by the spring members 5 corresponds to the center of gravity of the support substrate 2, the rotation of the support substrate due to the external force can be suppressed and the accuracy of the outputs can be increased. Preferably, the spring members 5 are arranged such that the value of ΔC/W is less than 15%. Fig. 22 shows a preferred example of the arrangement of the spring members 5 with respect to the support substrate 2 in the case where the components are mounted as shown in Fig. 20. The spring members 5 are arranged with different intervals in the horizontal direction and the vertical direction. In addition, the spring members 5 in the horizontal direction are arranged on the support substrate 2 such that they are shifted downward in the figure, and the spring members 5 in the vertical direction are arranged on the support substrate 2 such that they are shifted rightward in the figure, so that the center of rigidity C is positioned closer to the center of gravity G of the support substrate 2.

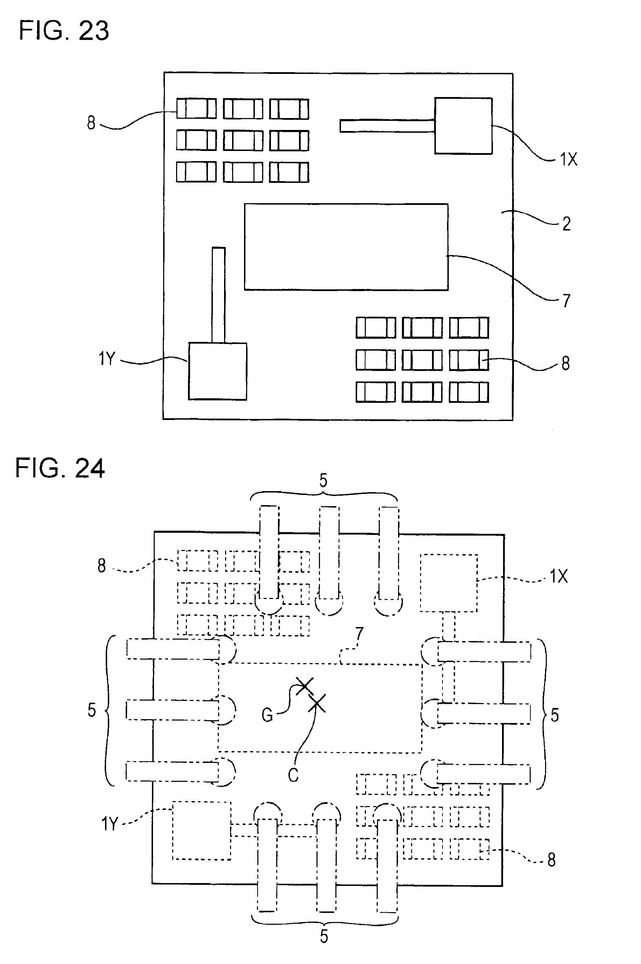

Conversely, the position of center of gravity of the support substrate 2 may be adjusted in accordance with the position of center of rigidity obtained when the spring members 5 are arranged symmetrical to each other about the X and Y axes as shown in Fig. 17. In such a case, as shown in Fig. 23, for example, a single component, such as the IC circuit element 7, may be disposed at the central area of the substrate, components provided in pairs, such as the vibrating elements 1X and 1Y, may be disposed on a diagonal line of the substrate, and components provided in plural numbers, such as chip capacitors 8, may be divided into two groups which are disposed at diagonal corners of the substrate. Accordingly, the position of the center of gravity G can be set near the center of the support substrate 2. Thus, by combining the above-described symmetrical arrangement of the spring members 5, the center of gravity G and the center of rigidity C of the support substrate 2 can be positioned so as to substantially coincide with each other, as shown in Fig. 24.

Here, it has been found that angle variation of the support substrate 2 can also be suppressed for vibration in the Z direction (height direction) by setting the center of gravity G and the center of rigidity C of the support substrate 2 to a position near the center of the support substrate 2. In this case, the distance between the center of gravity and the center of rigidity is preferably set to 15% or less, in particular, 7.5% or less of the length of sides of the support substrate.

### (Structure of Cap Member)

Next, the structure of the cap member 6 will be described. As described above, the cap member 6 is attached to the relay substrate 4 to shield the support substrate 2 from the outside, and is formed of a press-formed body made of a conductive plate member, such as a stainless steel plate and an aluminum plate, so as to provide an electromagnetic shield function. On the other hand, the spring members 5 which electrically and mechanically connect the support substrate 2 to the relay substrate 4 are arranged along the periphery of the support substrate 2. Therefore, when an impact is applied to the vibration type gyro sensor 10, there is a risk that the support substrate 2 will translate relative to the relay substrate 4 and the spring members 5 will come into contact with the cap member 6 and become electrically connected thereto.

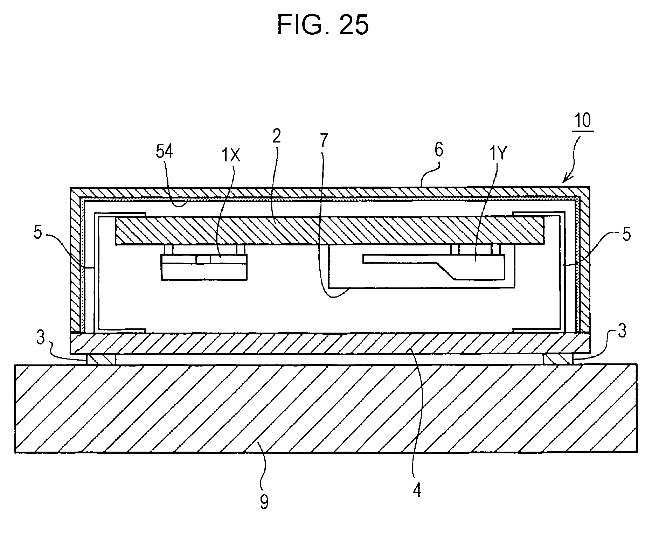

Therefore, as shown in Fig. 25, an insulating film 54 is formed on an inner surface of the cap member 6 so that the cap member 6 and the spring members 5 can be prevented from becoming electrically connected to each other when they come into contact with each other. The insulating film 54 may be formed of a thin film or a coating film made of an electrically insulating material, such as SiO₂ and Al₂O₃, or an electrically insulating sheet. Here, the insulating film 54 is not limited to the case in which it is formed over the entire area of the inner surface of the cap member 6. The insulating film 54 is formed at least in an area where the spring members 5 can come into contact therewith when the support substrate 2 translates.

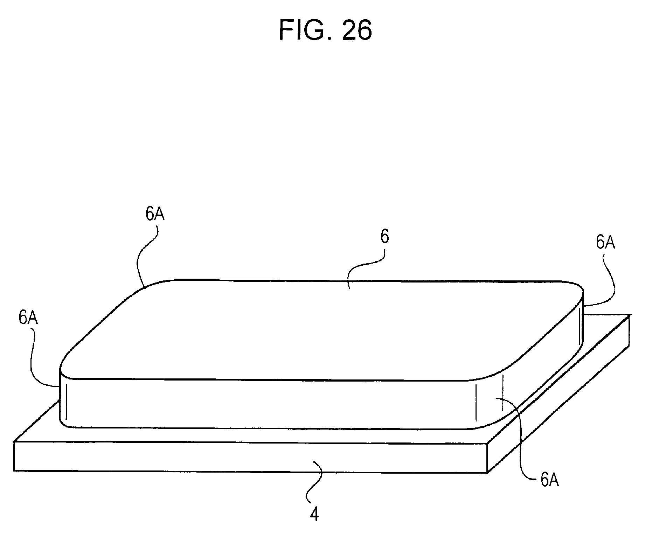

Alternatively, as shown in Fig. 26 to Fig. 29, the spring members 5 can also be prevented from coming into contact with the inner surface of the cap member 6 by devising the shape of the cap member 6.

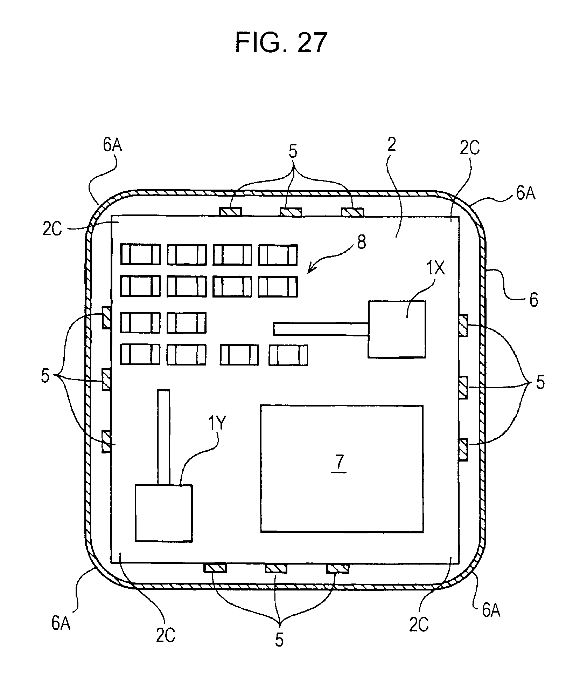

More specifically, in Fig. 26 and Fig. 27, corner portions 6A positioned at four corners of a peripheral side portion of the cap member 6 are formed in a curved shape. Thus, when the support substrate 2 translates in the horizontal direction due to vibration or the like, corner portions 2C of the support substrate 2 come into contact with the corner portions 6A of the cap member 6 before the spring members 5 come into contact with the cap member 6. Therefore, movement of the support substrate 2 in the in-plane direction is restrained and the spring members 5 and the cap member 6 can be prevented from coming into contact with each other and becoming electrically connected with each other. The corner portions 6A of the cap member 6 correspond to "restraining portions" according to the present invention.

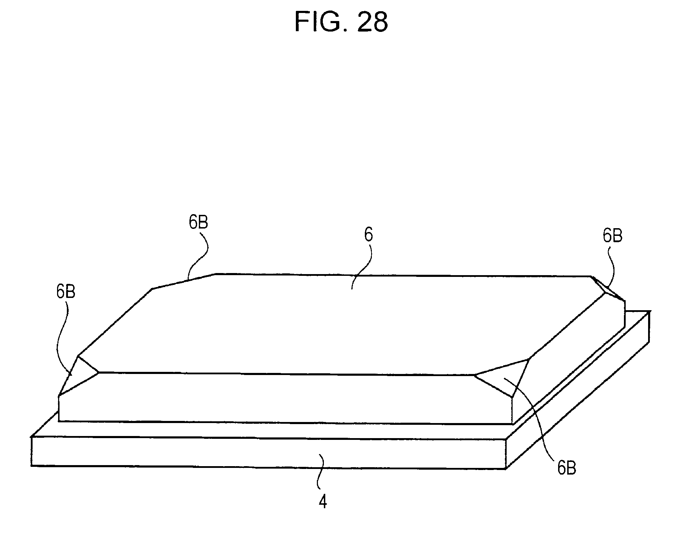

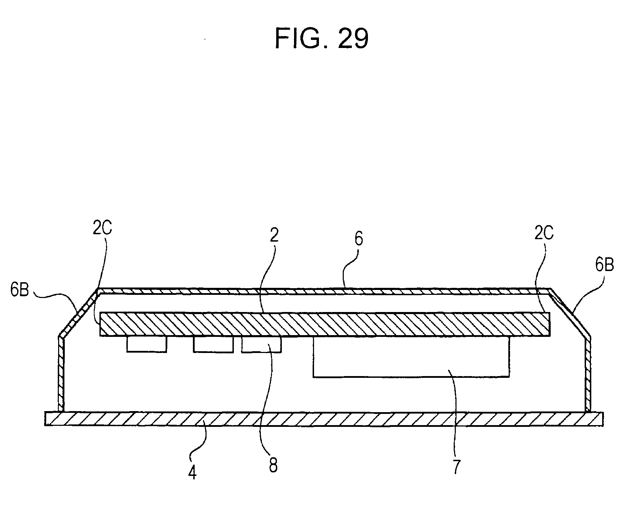

In addition, in Fig. 28 and Fig. 29, corner portions 6B positioned at four corners of the top surface of the cap member 6 are formed in a flat shape. Thus, when the support substrate 2 translates in the horizontal direction due to vibration or the like, corner portions 2C of the support substrate 2 come into contact with the corner portions 6B of the cap member 6 before the spring members 5 come into contact with the cap member 6. Therefore, movement of the support substrate 2 in the in-plane direction is restrained and the spring members 5 and the cap member 6 can be prevented from coming into contact with each other and becoming electrically connected with each other. The corner portions 6B of the cap member 6 correspond to "restraining portions" according to the present invention.
Here, in the example shown in the figure, the corner portions 6B of the cap member 6 having flat surfaces are shown to facilitate understanding of the explanation. However, the corner portions 6B are not limited to this, and may also have curved surfaces. This is because the cap member 6 is often manufactured by a drawing process in practice, and the corner portions 6B are formed in curved surfaces in such a case.

Due to the above-described structure, the clearance between the spring members 5 and the inner surface of the cap member 6 can be reduced while preventing the spring members 5 and the cap member 6 from coming into contact with each other. Therefore, the size of the vibration type gyro sensor can be reduced.

### (Bonding Structure of Spring Members)

The spring members 5 are fixed to the respective terminal portions of the support substrate 2 and the relay substrate 4 with a conductive bonding material, such as silver paste. Therefore, the height is increased by the amount corresponding to the thickness of the spring members 5 and the thickness of the adhesive layer, and it is difficult to reduce the thickness of the gyro sensor. Accordingly, the bonding structure of the spring members 5 for reducing the bonding height of the spring members 5 so that the thickness of the gyro sensor can be reduced will be described below.

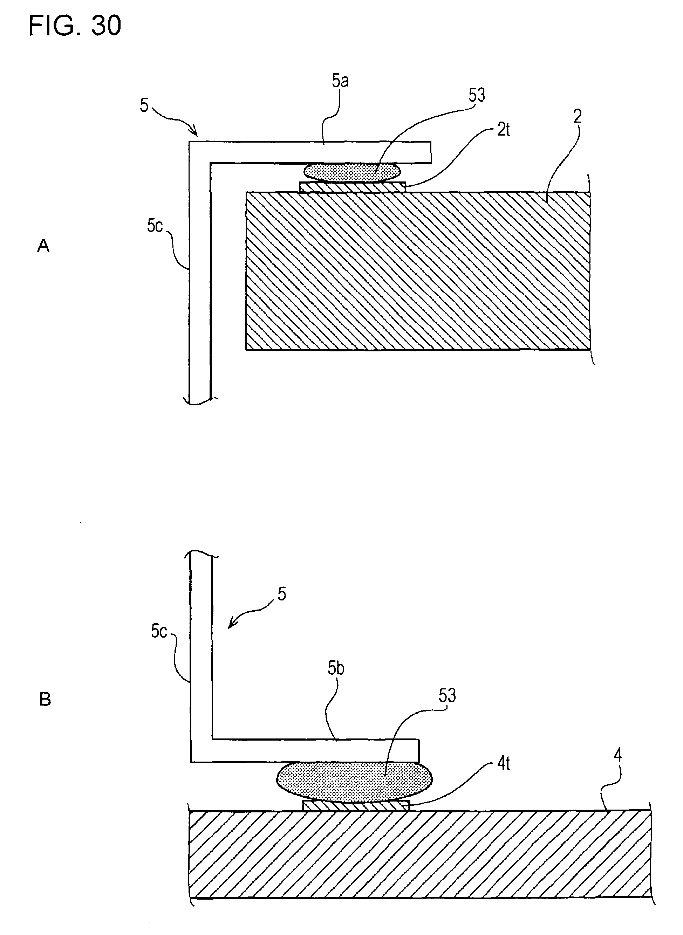

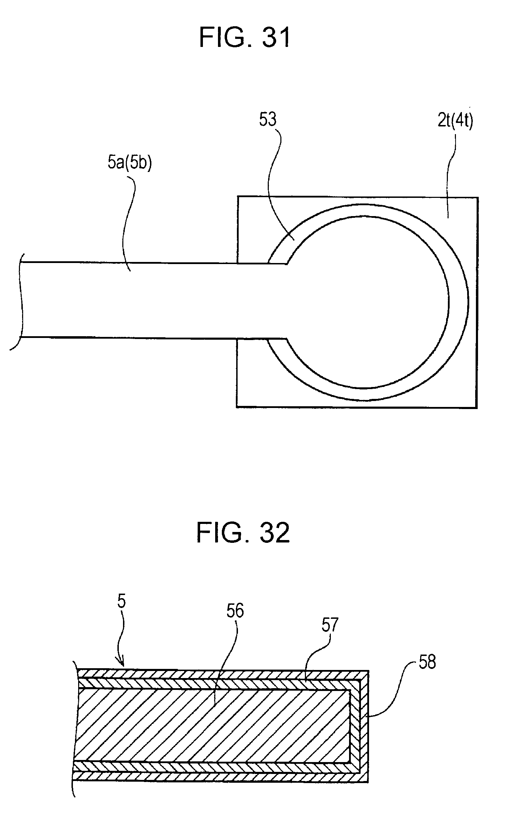

Figs. 30A and 30B and Fig. 31 are schematic enlarged views illustrating bonding sections between the spring member 5 and the support substrate 2 and between the spring member 5 and relay substrate 4 shown in Fig. 1. Referring to Fig. 30A, the first arm portion 5a of the spring member 5 is bonded to the terminal portion 2t of the support substrate 2 with the bonding material 53. In addition, referring to Fig. 30B, the second arm portion 5b of the spring member 5 is bonded to the terminal portion 4t of the relay substrate 4 with the bonding material 53.

In the example shown in the figures, the bonding material 53 is silver paste, and the amount of application thereof is set such that the adhesion height of the spring member 5 is about 50 µm. As shown in Fig. 32, the spring member 5 is obtained by successively forming a nickel plating layer 57 and a gold plating layer 58 on a surface of a base member 56 made of phosphor bronze. The nickel plating layer 57 is an underlayer for increasing the adhesiveness of the gold plating layer 58, and the gold plating layer 58 is formed to improve the adhesion with the silver paste and reduce the contact resistance. Here, the gold plating layer 58 may be a coating film made of gold paste or a gold vapor-deposited film.

In the example shown in Fig. 30, the height of projection from the top surface of the support substrate 2 corresponds to the sum of the adhesion height of the bonding material 53 and the thickness of the spring member 5 (first arm portion 5a) (50 µm + 50 µm = 100 µm). In this case, the attachment height of the cap member 6 must also be increased to prevent the contact with the spring members 5. As a result, the thickness of the gyro sensor cannot be reduced.

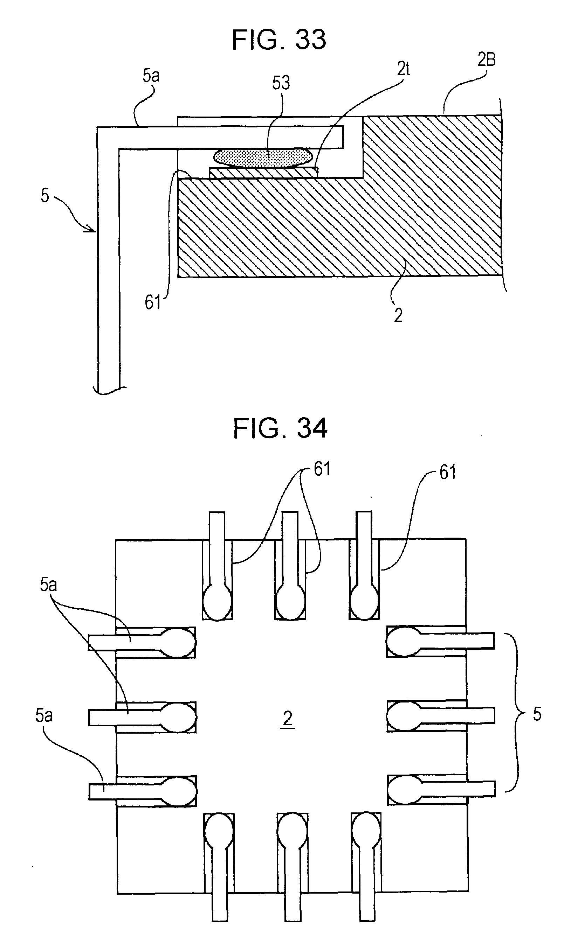

Therefore, according to the present invention, at least one of the terminal portions of the support substrate and the terminal portions of the relay substrate is formed in a recess formed in the terminal-portion forming surface of the support substrate or the terminal-portion forming surface of the relay substrate. Fig. 33 and Fig. 34 show an example in which the terminal portions 2t are formed on bottom portions of recesses 61 formed in the terminal-portion forming surface 2B of the support substrate 2. The recesses 61 are individually provided for the respective terminal portions 2t. Accordingly, the amount by which the spring members 5 (first arm portions 5a), which are bonded to the terminal portions 2t with the bonding material 53, project from the top surface of the support substrate 2 can be reduced and the thickness of the gyro sensor can be reduced by reducing the height of the cap member 6.

The depth of the recesses 61 is not particularly limited. However, in particular, the depth is preferably set such that the spring members 5 do not project from the top surface of the support substrate 2, as shown in Fig. 33. In addition, in the case where the recesses 61 are formed, the spring members 5 can be easily attached to the support substrate 2 and the work efficiency can be improved.

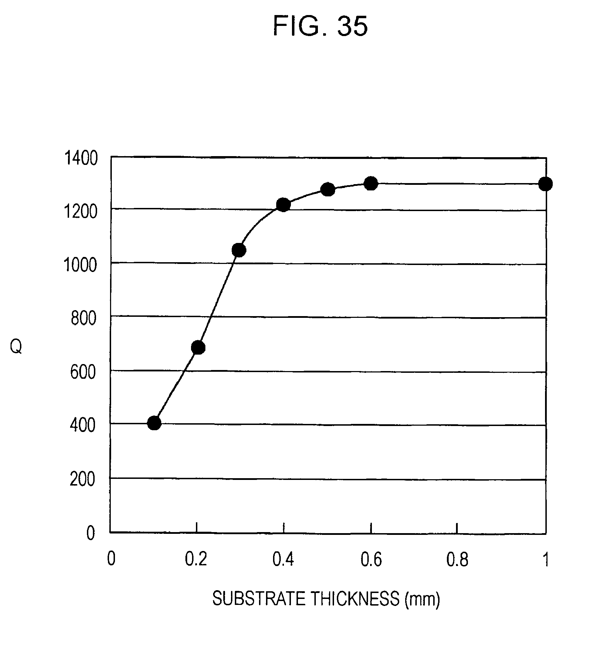

Here, the recesses 61 are not limit to those provided at a plurality of positions corresponding to the respective terminal portions 2t, and a single recess may be formed in the peripheral edge portion of the support substrate 2 so as to extend over an area where the individual terminal portions 2t are formed. In this case, the thickness of the peripheral edge portion of the support substrate 2 is reduced by an amount corresponding to the recesses. Therefore, the thickness is set such that at least the mechanical quality factor Q of the vibrating elements 1 can be ensured. Fig. 35 shows the relationship between the thickness of the support substrate and the mechanical quality factor Q of the vibrating elements. It can be understood that Q reduces as the thickness of the substrate reduces.

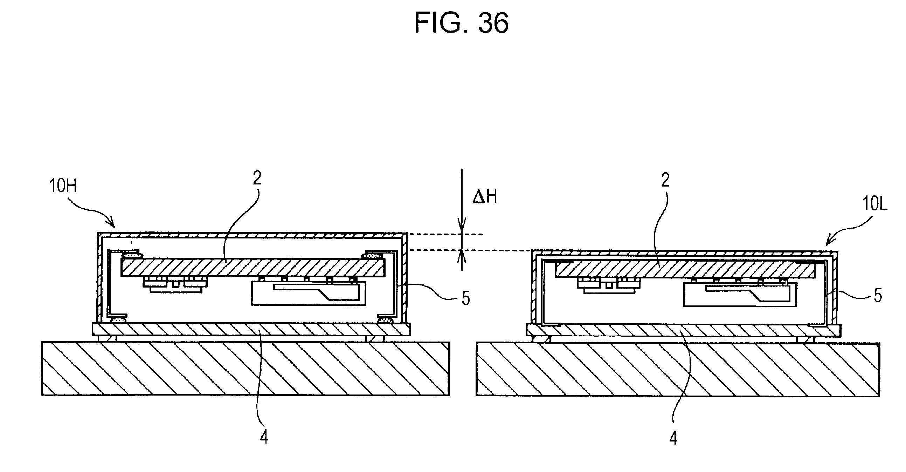

Here, the above-described structure can be applied not only to the terminal portions 2t of the support substrate 2 but also to the terminal portions 4t of the relay substrate 4 in a similar manner. In particular, when the structure is applied to both of the support substrate 2 and the relay substrate 4, the thickness of the gyro sensor can be further reduced. Fig. 36 shows sectional side views in which the height of the gyro sensor 10H having the structure shown in Fig. 1 and the height of the gyro sensor 10L including the spring bonding structure having the recesses 61 are compared with each other. The gyro sensor 10L can be structured such that thickness thereof is smaller by ΔH than that of the gyro sensor 10H. The value of ΔH corresponds to the bonding height of the spring members 5 for both of the support substrate 2 and the relay substrate 4.

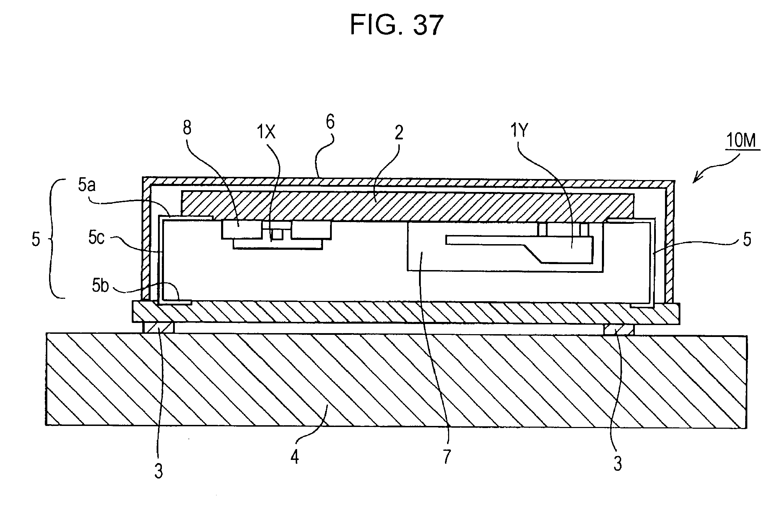

On the other hand, the vibration type gyro sensor according to the present invention may also be structured as shown in Fig. 37. Fig. 37 is a schematic diagram of a gyro sensor 10M in which the spring members 5 are arranged in another manner. In the gyro sensor 10M shown in the figure, the terminal-portion forming surface of the support substrate 2 is formed on the same surface as the component mounting surface on which the vibrating elements 1 (1X and 1Y) and other components are mounted. The first arm portions 5a of the spring members 5 are bonded to the surface of the support substrate 2 that faces the relay substrate 4.

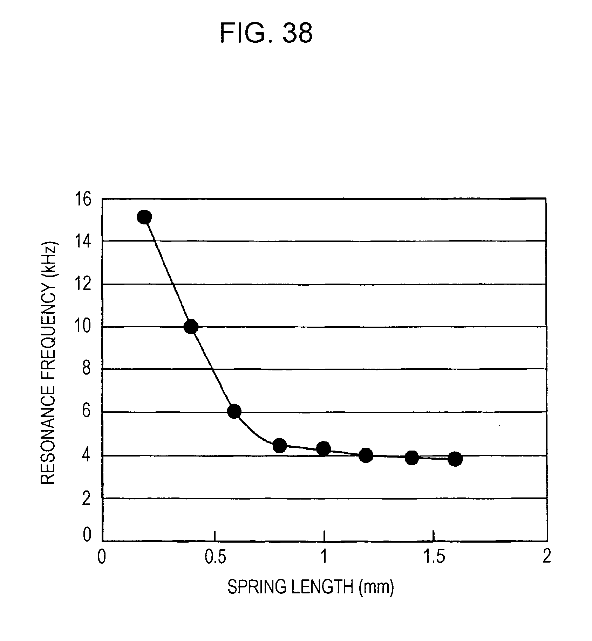

Here, in the gyro sensor 10M shown in Fig. 37, the length of the spring members 5 in the vertical direction (length of the connecting portions 5c) must be set to a predetermined length or more in consideration of the resonance frequency of the spring members 5. Fig. 38 shows the relationship between the length of the spring members (in the vertical direction) and the resonance frequency thereof. As is clear from Fig. 38, the resonance frequency of the spring members varies in accordance with the length of the spring members, and the resonance frequency tends to increase as the length is reduced. As described above, as described above with reference to Fig. 11 and Fig. 12, the resonance frequency of the spring members 5 is preferably set to 10 kHz or less. To satisfy this condition, it is necessary that the length of the spring members 5 be 0.5 mm or more.

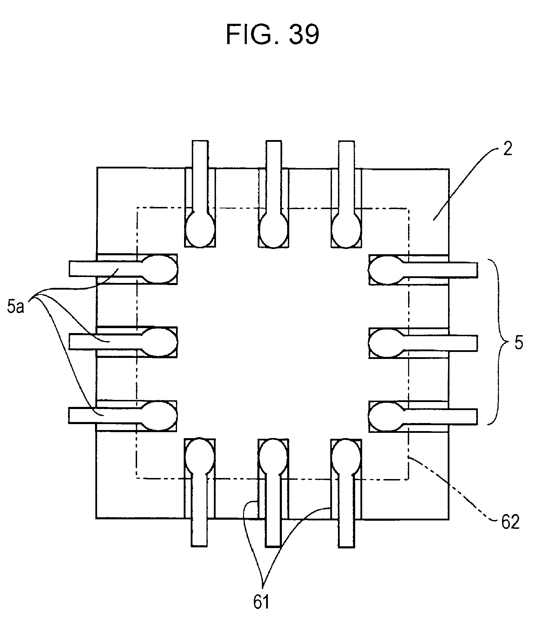

Furthermore, in the structure in which the spring members 5 are bonded to the above-described recesses 61 formed in the terminal-portion forming areas of the support substrate 2, as shown in Fig. 39, a reinforcing plate 62 may be adhered to the top surface of the support substrate 2 so as to cover the end portions of the spring members 5 in the recesses 61. This structure is advantageous in that the reliability of the bonding strength of the spring members 5 against external impact can be increased. In addition, the structure in which the contact state between the spring members and the terminal portions is maintained by nonconductive bonding material with which the recesses are filled can also be applied.

### (Countermeasures against Reflow)

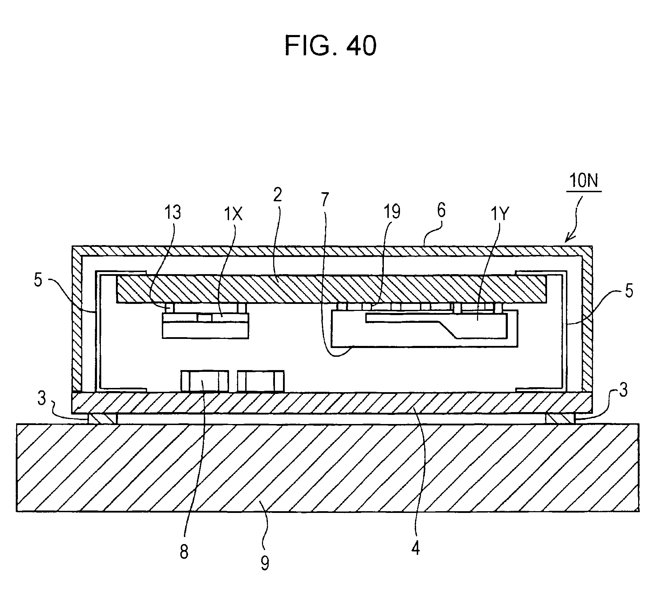

Fig. 40 is a schematic sectional side view illustrating a modification of the structure of the vibration type gyro sensor shown in Fig. 1. The structure of a vibration type gyro sensor 10N shown in Fig. 40 is similar to that of the vibration type gyro sensor shown in Fig. 1 in that the support substrate 2 on which the pair of vibrating elements 1 (1X and 1Y) are mounted is mechanically and electrically connected to the relay substrate 4 with the spring members 5.

According to the present embodiment, among the various kinds of components included in the sensor, electronic components, such as the chip capacitors 8, which are mounted by soldering are mounted on the relay substrate 4 and components, such as the vibrating elements 1, which are mounted by means other than soldering are collected on the support substrate 2. Accordingly, the vibrating elements 1 can be protected from strain generated due to remelting and solidifying of solder bonding portions in the reflow mounting process of mounting the sensor on the control substrate 4. In addition, the vibration characteristics of the vibrating elements 1 after the process of mounting the sensor on the control substrate 4 can be prevented from being changed from those before the mounting process. Here, in the example shown in Fig. 40, the IC circuit element 7 is mounted by ultrasonic bonding using the bumps 19, similar to the vibrating elements 1.

### (Countermeasures against Vibration of Support Substrate)

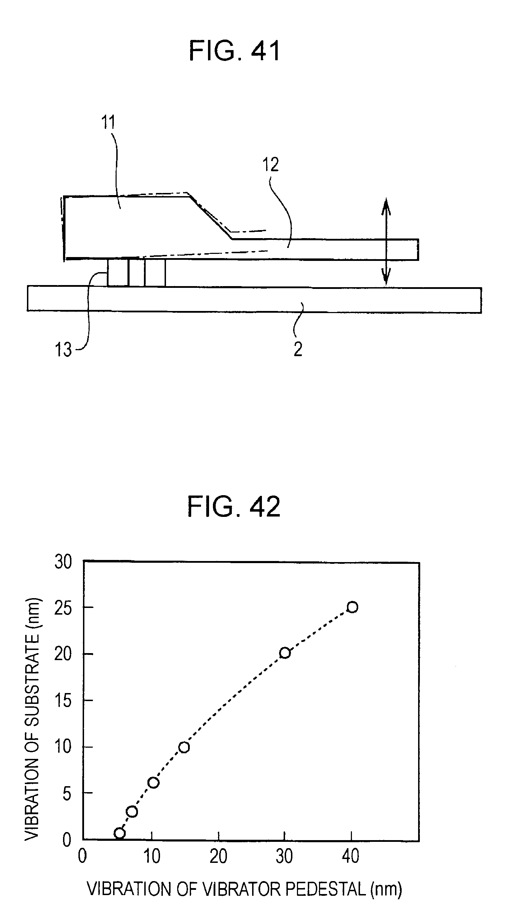

Next, countermeasures against the vibration of the support substrate will be described. Referring to Fig. 41, the vibrating element 1 includes the base 11 and the vibrator portion 12 supported by the base 11 in a cantilever manner. The base portion 11 is mounted on the support substrate 2 with the bumps 13 disposed therebetween. The base portion 11 functions as a pedestal which supports the vibration of the vibrator portion 12. However, the base portion 11 also vibrates when the vibrator portion 12 vibrates, and the vibration of the base portion 11 is also transmitted to the support substrate 2 through the bumps 13. Fig. 42 shows an example of the relationship between the vibration (amplitude) of the base portion (vibrator pedestal) 11 and the vibration (amplitude) of the support substrate 2. As is clear from Fig. 42, the vibration of the support substrate 2 tends to increase as the vibration of the base portion 11 increases.

The transmission of vibration of the support substrate 2 to the relay substrate 4 is suppressed by the spring members 5 which function as the buffer members according to the present invention. However, the vibration of the support substrate 2 is preferably small. In addition, if the state in which the vibration of the support substrate 2 is large is left unsolved, the possibility that the spring members 5 will come into contact with the cap 6 increases when, for example, an impact (acceleration) is applied to the sensor and the support substrate 2 is moved relative to the relay substrate 4. Therefore, from the viewpoint of ensuring the stable operation of the sensor, it is necessary that vibration of the support substrate 2 be as small as possible.

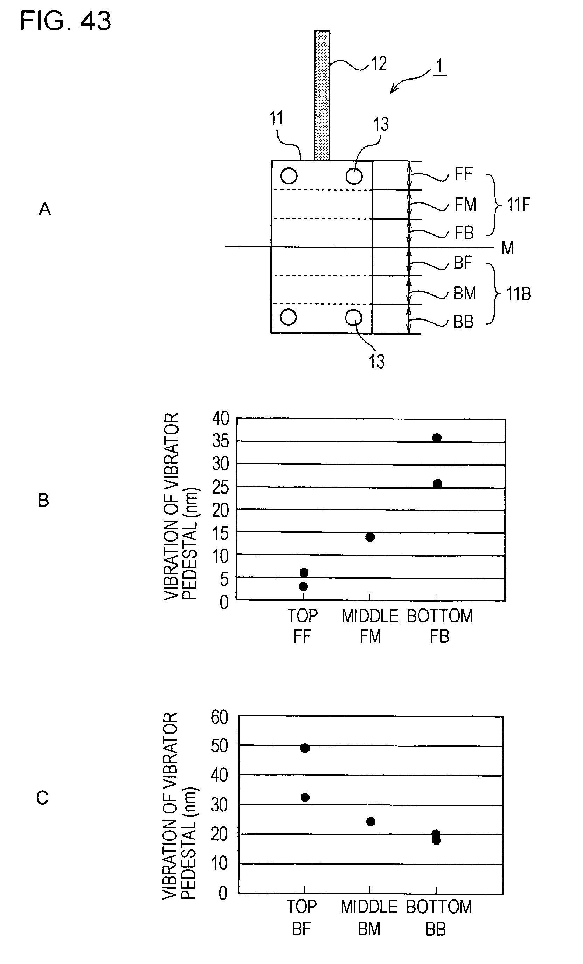

The inventors of the present invention have found that the magnitude of vibration of the base 11 can be controlled in accordance with the positions of the bumps 13. Referring to Fig. 43A, first, the central portion of the base portion 11 of the vibrating element 1 in the front-rear direction thereof (direction in which the vibrator portion 12 extends) is denoted by M. An area on a side of the central area M that is closer to the position where the vibrator portion 12 is disposed is defined as a front area 11F, and an area opposite thereto is defined as a rear area 11B. Furthermore, each area is evenly divided in the front-rear direction (vertical direction in Fig. 43A) into three small areas, and the individual small areas are respectively denoted by FF, FM, FB, BF, BM, and BB. Then, the vibration amplitude of the base portion (pedestal) 11, which depends on which of the above-described individual small areas include the central positions of the bumps 13, was measured. Thus, the results shown in Figs. 43B and 43C were obtained. With regard to the measurement conditions, the number of bumps 13 was four and two bumps were disposed in the same small area in each of the front and rear (up and down) sections.

It can be understood from the result shown in Fig. 43B that, with regard to the two bumps in the front section (upper bumps), the pedestal vibration is at a minimum when the bumps are arranged in the area FF closest to the vibrator portion 12 and the pedestal vibration is at a maximum when the bumps are arranged in the area FB farthest from the vibrator portion 12. In addition, it can be understood from the result shown in Fig. 43C that, with regard to the two bumps in the rear section (lower bumps), the pedestal vibration is at a minimum when the bumps are arranged in the area BB farthest from the vibrator portion 12 and the pedestal vibration is at a maximum when the bumps are arranged in the area BF closest to the vibrator portion 12.

The above-described results show that, with regard to the arrangement positions of the bumps 13 provided on the base portion 11, the transmission of vibration to the support substrate 2 can be minimized by arranging the two bumps in the front section at positions as close to the vibrator portion 12 as possible and arranging the two bumps in the rear section to positions as far from the vibrator portion 12 as possible. Preferably, the bumps 13 are arranged in areas (hereinafter called "bump arrangement areas") within 30% of the overall length of the base portion 11 in the front-rear direction from the front edge portion and rear edge portion of the base portion 11. When the base portion 11 is evenly divided along the direction in which the vibrator portion 12 extends into three areas (area to which FF and FM belong, area to which FB and BF belong, and area to which BM and BB belong), the above-mentioned bump arrangement areas correspond to the area closest to the vibrator portion 12 (area to which FF and FM belong) and the area farthest from the vibrator portion 12 (area to which BM and BB belong). Here, the arrangement of the individual bumps are not limited to the arrangement in which two bumps are disposed in the same bump arrangement area in each of the front and rear sections as long as at least one of the bumps or an additionally formed dummy bump is disposed in each of the bump arrangement areas.

### (Second Embodiment)

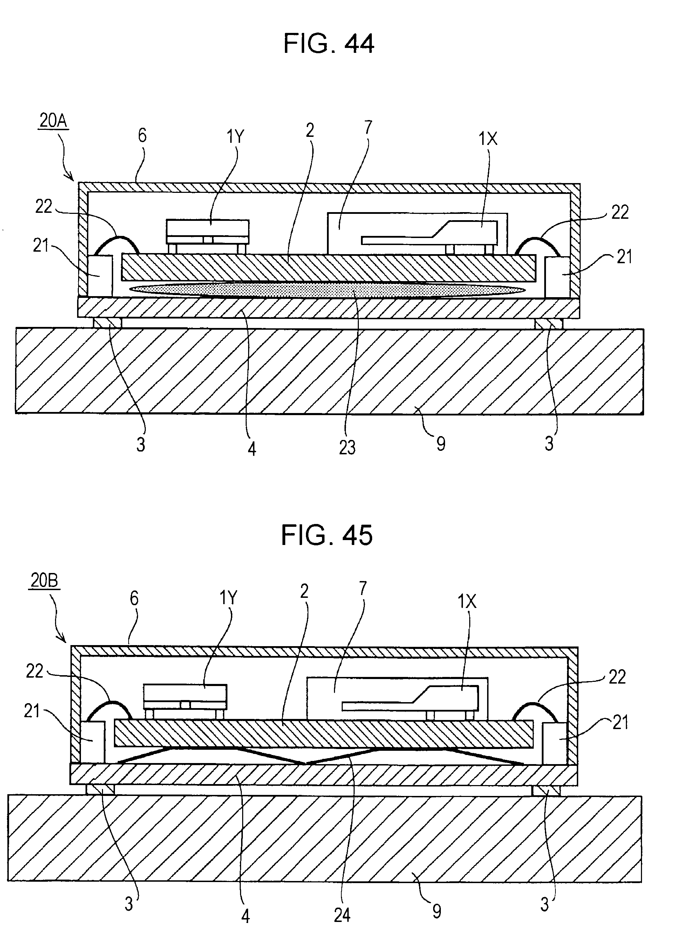

Fig. 44 is a sectional side view illustrating the schematic structure of a vibration type gyro sensor 20A according to a second embodiment of the present invention. Here, in the figure, components similar to those of the above-described first embodiment are denoted by the same reference numerals, and detailed explanations thereof are omitted. In addition, in the figure, the electronic components 8 mounted on the support substrate 2 are not shown.

In the vibration type gyro sensor 20A according to the present embodiment, a buffer member 23 made of a vibration absorbing material is disposed between the support substrate which supports the pair of vibrating elements 1X and 1Y and the relay substrate 4 mounted on the control substrate 9. The electrical connection between the support substrate 2 and the relay substrate 4 is provided by electrode members 21 and bonding wires 22. The bonding wires 22 are examples of "wiring member" according to the present invention, and electrically connect the individual terminal portions on the support substrate 2 to the electrode members 21 attached to the relay substrate 4.

The buffer member 23 is made of a material having a function of suppressing the transmission of strain from the relay substrate 4 to the support substrate 2 and the transmission of vibration from the support substrate 2 to the relay substrate 4. For example, a rubber material, a resin material, such as urethane foam, or the like is used. Accordingly, the disturbance noise can be suppressed from being increased due to transmission of strain, leakage of vibration, etc., and stable vibration characteristics can be obtained and the output characteristics can be improved, similar to the above-described first embodiment.

In addition, Fig. 45 shows an example in which a vibration type gyro sensor 20B includes a buffer member 24 made of a leaf spring disposed between the support substrate 2 and the relay substrate 4. The buffer member 24 elastically supports the support substrate 2 on the relay substrate 4, thereby providing operational effects similar to those described above.

### (Third Embodiment)

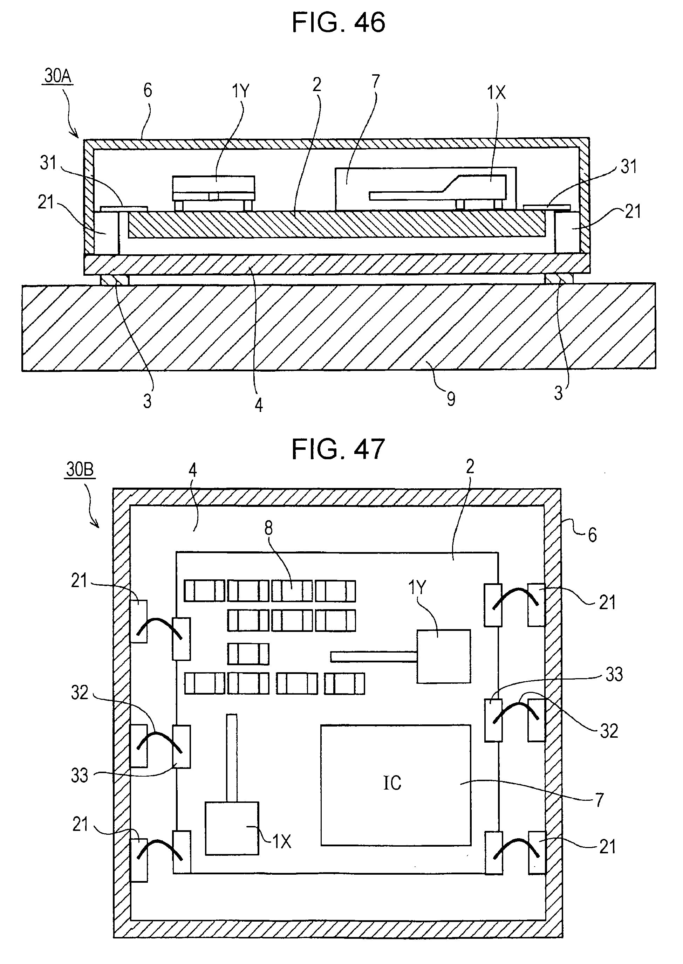

Fig. 46 shows a third embodiment of the present invention. Here, in the figure, components similar to those of the above-described first embodiment are denoted by the same reference numerals, and detailed explanations thereof are omitted. In addition, in the figure, the electronic components 8 mounted on the support substrate 2 are not shown.

In the vibration type gyro sensor 30A according to the present embodiment, the support substrate 2 which supports the pair of vibrating elements 1X and 1Y is electrically connected to the electrode members 21 on the relay substrate 4 through flexible wiring boards 31. In addition, the support substrate 2 is suspended at a position above the relay substrate 4 by the flexible wiring boards 31.

The flexible wiring boards 31 function as buffer members that suppress the transmission of strain and vibration between the support substrate 2 and the relay substrate 4, and also have a function as wiring members that electrically connect the support substrate 2 and the relay substrate 4 to each other. The present embodiment also provides operational effects similar to those of the above-described first embodiment.

In addition, Fig. 47 shows a vibration type gyro sensor 30B which includes metal wires 32 having spring characteristics instead of the flexible wiring members 31. The metal wires 32 electrically and mechanically connect individual terminal portions 33 on the support substrate 21 to the electrode members 21 on the relay substrate 4. The transmission of strain and vibration between the support substrate 2 and the relay substrate 4 is suppressed due to elastic deformation of the metal wires 32.

### (Fourth Embodiment)

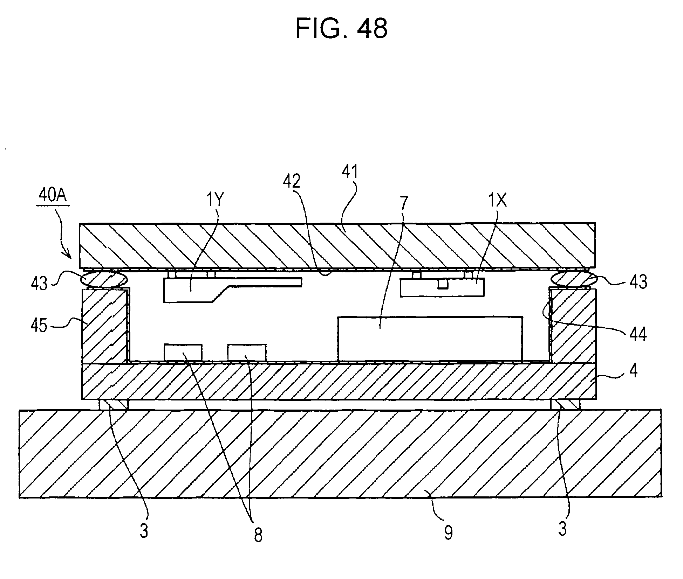

Fig. 48 to Fig. 50 show a fourth embodiment of the present invention. Here, in the figures, components similar to those of the above-described first embodiment are denoted by the same reference numerals, and detailed explanations thereof are omitted.

A vibration type gyro sensor 40A shown in Fig. 48 is structured such that a support substrate 41 which supports the pair of vibrating elements 1X and 1Y is electrically and mechanically connected to top ends of side walls 45 on the relay substrate 4 with a conductive adhesive layer 43 disposed therebetween. A wiring layer 42 is formed on one principal surface of the support substrate 41. Only the vibrating elements 1X and 1Y are mounted on the wiring layer 42, and the element mounting surface faces the relay substrate 4. In addition, the support substrate 42 forms a top cover of the gyro sensor 40A.

The IC circuit element 7 and other electronic components 8 are mounted on the relay substrate 4. A wiring layer 44, which is electrically connected to the IC circuit element 7 and the electronic components 8, extends over the inner wall surfaces and top surfaces of the side walls 45 which stand upright along the periphery of the relay substrate 4. The wiring layer 44 on the relay substrate 4 is electrically connected to the wiring layer 42 on the support substrate 41 through the conductive adhesive layer 43.

The conductive adhesive layer 43 may be made of conductive paste, anisotropic conductive paste, anisotropic conductive film, or the like. In particular, in resin matrix material included in conductive particles, an insulating material including, for example, a rubber material which has relatively high elastic deformability as the base material is used. Accordingly, operational effects similar to those of the above-described first embodiment can be obtained. More specifically, the conductive adhesive layer 43 functions as a buffer member according to the present invention, and suppresses the transmission of strain from the relay substrate 4 to the support substrate 41, so that the vibration characteristics of the vibrating elements 1X and 1Y can be stabilized. In addition, the function of suppressing the transmission of vibration of the vibrating elements 1X and 1Y from the support substrate 41 to the relay substrate 4 can be obtained, and reduction in the output characteristics due to the leakage of the vibration to the outside can be suppressed.

In addition, in the vibration type gyro sensor 40A according to the present embodiment, the vibrating elements 1X and 1Y and the other components including the IC circuit element 7 and the electronic components 8 are respectively mounted on different substrates (the support substrate 41 and the relay substrate 4). Therefore, the mounting area of each substrate can be reduced and the size of the vibration type gyro sensor 40A can be reduced accordingly. Furthermore, when the sensor 40A is reflow-soldered onto the control substrate 9, strain is generated in the relay substrate 4 during the process of remelting the solder bonding portions of the IC circuit element 7, the electronic components 8, etc., and then solidifying the solder bonding portions by cooling them. Since the thus generated strain can be prevented from being transmitted to the support substrate 41, the effect of stabilizing the vibration characteristics of the vibrating elements 1X and 1Y can be further enhanced.

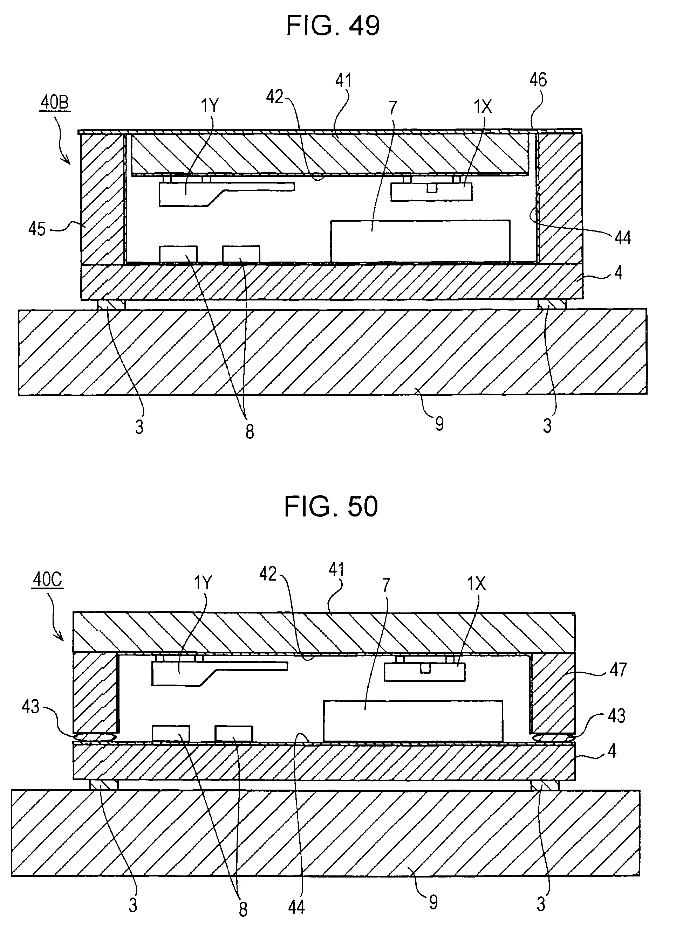

Next, Fig. 49 shows a vibration type gyro sensor 40B in which the support substrate 41 which supports the vibrating elements 1X and 1Y is formed of a double-sided wiring board. A wiring layer 42 on which the vibrating elements 1X and 1Y are mounted is formed on an inner-side principal surface (bottom surface in Fig. 49) of the double-sided wiring board, and a buffer member 46 is attached to an outer-side principal surface (top surface in Fig. 49) thereof. The buffer member 46 is formed of a flexible wiring board, a leaf spring member, or the like which is interlayer-connected to the wiring layer 42, and functions also as a wiring member. Here, the peripheral edge portion of the buffer member 46 is electrically and mechanically connected to the side walls 45 and the wiring layer 44 on the relay substrate 4, so that the support substrate 41 is suspended at a position above the relay substrate 4 on which the IC circuit element 7 and the electronic components 8 are mounted. The vibration type gyro sensor 40B having the above-described structure also provides the effects similar to the above-described effects.

In addition, Fig. 50 shows a vibration type gyro sensor 40C structured such that the support substrate 41 which supports the pair of vibrating elements 1X and 1Y is supported on the relay substrate 4 with side walls 47 and the conductive adhesive layer 43. The wiring layer 42 formed on the component mounting surface of the support substrate 41 is electrically connected to the wiring layer 44 on the relay substrate 4 through the inner surfaces of the side walls 47 and the conductive adhesive layer 43. The conductive adhesive layer 43 is structured as described above, and serves as a buffer member that also functions as a wring member. The vibration type gyro sensor 40C according to the present example provides operational effects similar to the above-described effects.

### (Fifth Embodiment)

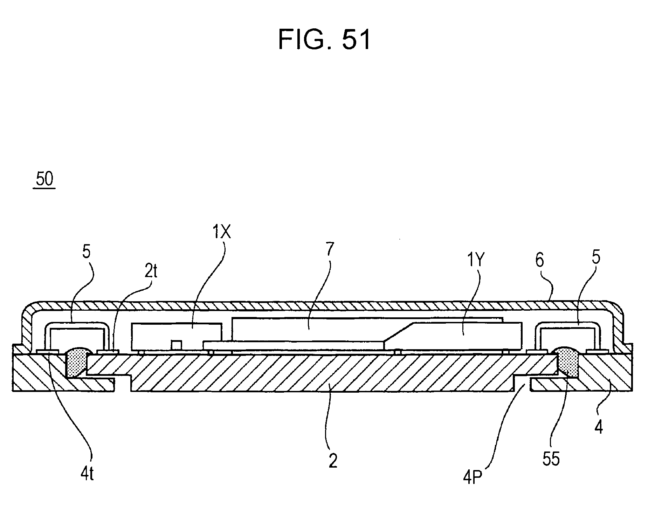

Fig. 51 is a sectional side view illustrating the schematic structure of a vibration type gyro sensor 50 according to a fifth embodiment of the present invention. Here, in the figure, components similar to those of the above-described first embodiment are denoted by the same reference numerals, and detailed explanations thereof are omitted.

In the vibration type gyro sensor 50 according to the present embodiment, the arrangement relationship between the support substrate 2 which supports the pair of vibrating elements 1X and 1Y and the relay substrate 4 including the external connection terminals (not shown) connected to the control substrate (not shown) differs from that of the above-described first embodiment. More specifically, in the vibration type gyro sensor 10 according to the above-described first embodiment, the support substrate 2 and the sensor substrate 4 are arranged so as to face each other in the sensor height direction. In comparison, in the vibration type gyro sensor 50 according to the present embodiment, the relay substrate 4 is positioned outside (outer peripheral side) of the support substrate 2. Thus, the sensor height can be reduced and the thickness of the gyro sensor can be reduced accordingly.

An opening 4P is formed in the relay substrate 4 at a substantially central section thereof, and the support substrate 2 is placed in the opening 4P in the relay substrate 4. Terminal portions 2t of the support substrate 2 are connected to terminal portions 4t of the relay substrate 4 with a plurality of spring members 5. Thus, the individual terminal portions 2t are electrically connected to the respective terminal portions 4t with the spring members 5. In addition, the support substrate 2 is mechanically connected to the relay substrate 4 such that the support substrate 2 is suspended in the opening 4P by the spring members 5. Thus, an independent vibration system of the support substrate 2 is formed.

The various kinds of components mounted on the support substrate 2 and the spring members 5 are shielded from the outside by the cap member 6 attached to the top surface of the relay substrate 4. In addition, in the case where the opening 4P is a through hole as shown in the figure, a boundary portion between the relay substrate 4 and the support substrate 2 is shielded with a shielding member 55 to prevent a foreign body from entering through the bottom surface of the relay substrate 4. The shielding member 55 is formed of, for example, a silicone based adhesive which has flexibility so as to suppress the transmission of vibration and strain between the support substrate 2 and the relay substrate 4.

The vibration type gyro sensor 50 according to the present embodiment having the above-described structure also provides operational effects similar to those of the above-described first embodiment. In particular, in the vibration type gyro sensor 50 according to the present embodiment, the relay substrate 4 is disposed outside the support substrate 2. Therefore, the sensor height can be reduced and the thickness of the gyro sensor can be reduced accordingly. Here, the relay substrate 4 is not limited to the case in which it is positioned outside the support substrate 2 as in the above-described example, and similar effects can also be obtained when the relay substrate 4 is positioned inside (inner peripheral side) of the support substrate 2.

## Claims

1. A vibration type gyro sensor, **characterized by** comprising:
a vibrating element which detects an angular velocity;
a support substrate which is electrically connected to the vibrating element and which supports the vibrating element;
a relay substrate which is electrically connected to the support substrate and which has an external connection terminal; and
a buffer member disposed between the support substrate and the relay substrate.

2. The vibration type gyro sensor according to claim 1, **characterized in that**
the buffer member serves also as a wiring member which electrically connects the support substrate and the relay substrate to each other.

3. The vibration type gyro sensor according to claim 1, **characterized in that**
a plurality of the buffer members are disposed along the periphery of the support substrate, and are formed as wiring members which electrically connect the support substrate and the relay substrate to each other.

4. The vibration type gyro sensor according to claim 1, **characterized in that**
a plurality of the buffer members are disposed along the periphery of the support substrate, and
the buffer members are arranged at positions symmetric to one another about two orthogonal axes in the plane of the support substrate.

5. The vibration type gyro sensor according to claim 1, **characterized in that**
a plurality of the buffer members are disposed along the periphery of the support substrate, and
the buffer members are arranged such that the center of rigidity of the support substrate supported by the buffer members corresponds to the center of gravity of the support substrate.

6. The vibration type gyro sensor according to claim 3, **characterized in that**
the buffer members are spring members including first arm portions bonded to terminal portions of the support substrate, second arm portions bonded to terminal portions of the relay substrate, and connecting portions which connect the first and second arm portions to each other.

7. The vibration type gyro sensor according to claim 6, **characterized in that**
an edge portion of the support substrate has a cut-off portion for preventing a contact with the first arm portions.

8. The vibration type gyro sensor according to claim 1, **characterized in that** at least one of a terminal portion of the support substrate and a terminal portion of the relay substrate is formed in a recess formed in a terminal-portion forming surface of the support substrate or a terminal-portion forming surface of the relay substrate.

9. The vibration type gyro sensor according to claim 1, **characterized in that**
a cap member for shielding the support substrate from the outside is attached to the relay substrate.

10. The vibration type gyro sensor according to claim 9, **characterized in that**
at least a portion of an inner surface side of the cap member is formed of an electrically insulating material.

11. The vibration type gyro sensor according to claim 9, **characterized in that**
at least a portion of the cap member is formed of a conductive material and is connected to a ground potential.

12. The vibration type gyro sensor according to claim 9, **characterized in that**
the cap member is provided with a restraining portion which restrains a movement of the support substrate in an in-plane direction.

13. The vibration type gyro sensor according to claim 1, **characterized in that**
the relay substrate and/or the support substrate has a shield layer for shielding noise.

14. The vibration type gyro sensor according to claim 1, **characterized in that**
the support substrate and the relay substrate are arranged so as to face each other in a sensor height direction.

15. The vibration type gyro sensor according to claim 1, **characterized in that**
the relay substrate is positioned outside or inside the support substrate.

16. The vibration type gyro sensor according to claim 1, **characterized in that**
a terminal portion of the support substrate and a terminal portion of the relay substrate are connected to each other with a wiring member.

17. The vibration type gyro sensor according to claim 1, **characterized in that**
a plurality of the vibrating elements are provided on the support substrate, the vibrating elements detecting angular velocities in axial directions that are different from each other.

18. The vibration type gyro sensor according to claim 1, **characterized in that**
a circuit element is mounted on the support substrate together with the vibrating element.

19. The vibration type gyro sensor according to claim 1, **characterized in that**
only the vibrating element is mounted on the support substrate, and a circuit element is mounted on the relay substrate.

20. The vibration type gyro sensor according to claim 1, **characterized in that**
the vibrating element includes a vibrator having a cantilever structure.

21. The vibration type gyro sensor according to claim 20, **characterized in that**
the vibrating element has a base portion which supports the vibrator and a plurality of metal bumps for mounting provided on the base portion, and
the base portion is evenly divided into three areas along a direction in which the vibrator extends, and at least one of the metal bumps is disposed in each of the area closest to the vibrator and the area farthest from the vibrator of the three areas.
